(19) Europäisches Patentamt
European Patent Office
Office européen des brevets

(11) EP 2 183 959 A1

(12) EUROPEAN PATENT APPLICATION
published in accordance with Art. 153(4) EPC

(43) Date of publication:
**12.05.2010 Bulletin 2010/19**

(21) Application number: **08828666.1**

(22) Date of filing: **28.08.2008**

(51) Int Cl.:
***A01G 7/00*** *(2006.01)* ***A01G 7/06*** *(2006.01)*
***A01N 43/16*** *(2006.01)* ***A01P 21/00*** *(2006.01)*

(86) International application number:
**PCT/JP2008/065451**

(87) International publication number:
**WO 2009/028626 (05.03.2009 Gazette 2009/10)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.08.2007 JP 2007225615**

(71) Applicant: **Kao Corporation**
**Chuo-ku**
**Tokyo 103-8210 (JP)**

(72) Inventor: **KAMEI, Masatoshi**
**Wakayama 640-8580 (JP)**

(74) Representative: **HOFFMANN EITLE**
**Patent- und Rechtsanwälte**
**Arabellastrasse 4**
**81925 München (DE)**

# (54) METHOD FOR IMPARTING STRESS TOLERANCE TO PLANT

(57) A method for imparting stress tolerance to a plant that can provide the plant with such stress tolerance that enhances growth in an environment where various stresses on the plant occur is provided. The method includes the step of applying a plant stress tolerance imparting composition containing a sugar derivative-type surfactant and water to a plant placed under a stressful cultivation condition that yields a plant stress level of 111 to 200%. In the plant stress tolerance imparting composition, the sugar derivative-type surfactant contains at least one sugar derivative-type surfactant having a structure selected from the group consisting of an ester of a sugar and a fatty acid, an ester of a sugar alcohol and a fatty acid, and an alkylglycoside. The sugar derivative-type surfactant is contained in an amount of 85 to 100 wt% of a total amount of the components other than water contained in the tolerance imparting composition.



Printed by Jouve, 75001 PARIS (FR)

## Description

Technical Field

The present invention relates to a method for imparting stress tolerance to a plant.

Background Art

About one third of the land on the earth belongs to an arid region, and further expansion of the arid region due to further global warning is expected. Also to address serious food shortages due to population growth, the development of a technique to improve, maintain, and enhance plant yields is urgently needed in regions that are arid, accumulate salt, or have a high or low temperature for plants, i.e., regions where in a conventional manner plants are unlikely to grow or growth is hindered and yields are reduced.

When plants grow in a natural or artificial environment, plants are exposed to various stresses such as temperature (high temperature, low temperature, freezing), the severity of wind, light intensity (strong light, weak light), dryness, the toxicity of inorganic substances (e.g., salts, heavy metals, and alumi.nium), oxygen, mechanics, and pests. Plants, unlike animals, cannot protect themselves from various stresses by migration. It is known that plants therefore produce, when they are exposed to a stress, various substances in their bodies to develop stress tolerance, for example, compatible solutes such as proline, glycine betaine, and sugars (Nonpatent Document 1). Moreover, it is known that when plants are exposed to such stresses, plants produce an aging hormone such as abscisic acid to slow or terminate growth, and as a result yields are reduced.

Methods for enhancing such stress tolerance of plants include a method that involves selection and breeding as well as gene modification (See Patent Document 1) and application of plant energizers such as sugars, organic acids, and amino acids (See Patent Document 2). In addition, sugar derivative-type surfactants such as alkyl polyglycosides are known to be agents that disperse or emulsify the principal ingredients of plant energizers (See Patent Document 3).

Patent Document 1: JP 2002-262885 A
Patent Document 2: JP 2005-192534 A
Patent Document 3: JP 2001-316207 A
Nonpatent Document 1: "Tanpakushitsu, Kakusan, Kouso (Proteins, Nucleic Acids, Enzymes)" (Kyoritsu Shuppan Co., Ltd.), Vol. 44 No. 15, pp. 54 to 65, 1999

Disclosure of Invention

Problem to be Solved by the Invention

However, the methods disclosed in Patent Documents 1 and 2 impart stress tolerance only slightly, not producing sufficient effects, and none of the methods is currently practically used. Moreover, sugar derivative-type surfactants such as alkyl polyglycosides as described in Patent Document 3 are not expected to function as plant energizers, and it has not been anticipated that such sugar derivative-type surfactants can impart stress tolerance.

An object of the present invention is to provide a plant stress tolerance imparting composition that can provide a plant with such stress tolerance that enhances growth in an environment where various stresses on a plant occur, a method for imparting stress tolerance to a plant, and a method for producing a plant.

Means for Solving Problem

The present invention is directed to a plant stress tolerance imparting composition containing a sugar derivative-type surfactant and water; the sugar derivative-type surfactant contains at least one sugar derivative-type surfactant having a structure selected from the group consisting of an ester of a sugar and a fatty acid, an ester of a sugar alcohol and a fatty acid, and an alkylglycoside; and the sugar derivative-type surfactant is contained in an amount of 85 to 100 wt% of the total amount of the components other than water contained in the tolerance imparting composition.

The method for imparting stress tolerance to a plant of the present invention includes the step of applying the plant stress tolerance imparting composition of the present invention to a plant placed under stressful cultivation conditions that yield a plant stress level as described below of 111 to 200%.

The method for producing a plant of the present invention encompasses the method for imparting stress tolerance to a plant of the present invention.

The use of a plant stress tolerance imparting composition of the present invention is use of the plant stress tolerance imparting composition of the present invention for imparting stress tolerance to a plant placed under stressful cultivation conditions that yield a plant stress level of 111 to 200%.

Effects of the Invention

According to the present invention, a plant stress tolerance imparting composition that can provide a plant with such stress tolerance that enhances growth in an environment where various stresses on a plant occur, a method for imparting stress tolerance to a plant, and a method for producing a plant are provided.

Best Mode for Carrying Out the Invention

Herein, "plants" refer to plants that may be associated with the term plant itself, such as vegetables, fruits, fruit trees, grains, seeds, bulbs, flowering plants, herbs, and those taxonomically categorized as plants.

When a plant is cultivated in an environment that is different from an environment that is most suitable for the plant to grow (for example, salt concentration in soil, temperature, humidity, and a like factor can serve as indicators), a phenomenon in which the physiological metabolism of the plant body is reduced and growth is inhibited occurs. Such a state of a plant is herein described as "a plant is exposed to a stress" or "a plant is stressed".

Generally, for cultivated plants such as agricultural products, cultivation conditions suitable for each plant are known. When a plant is cultivated under such suitable cultivation conditions or similar conditions, the plant is not stressed. Herein, whether a plant is stressed or not is determined according to the plant stress level described below. That is, the plant stress level (%) is calculated according to Formula (ii) below using the weight of a plant body that has been cultivated under a condition whose numerical value indicating salt, dryness, temperature, or a like factor that can be stressful exceeds a suitable range (plant body weight 1: weight of a plant body cultivated under stress) and the weight of a plant body that has been cultivated under a suitable condition in which such a stress factor does not exist (state of not being exposed to a stress) (plant body weight 2: weight of a plant body cultivated under no stress), and the numerical value of the plant stress level being 111% or greater means that the growth is reduced by 10% or greater (in terms of weight) and such a cultivation condition is determined as being stressful. The plant stress tolerance imparting composition of the present invention is applied as described above to a plant placed under a cultivation conditions that yield a plant stress level of 111 to 200%. Moreover, the composition preferably is applied to a plant placed under stressful cultivation conditions that yield a stress level of 120 to 180% and more preferably 120 to 160%. Use of the tolerance imparting composition on a plant placed under stressful cultivation conditions that yield such a stress level produces a more significant effect in terms of imparting plant stress tolerance. The plant stress level can also be calculated using the results obtained after simulating in a laboratory or a like facility cultivation conditions in which a specific stress factor that is present in actual cultivation conditions is not present.

$$\text{Plant stress level (\%)} = (\text{Plant body weight 2} / \text{Plant body weight 1}) \times 100 \qquad \text{(ii)}$$

It is preferable to perform the measurement when a stress is reflected as a decrease in the fresh weight after the stress is applied and the growth of a plant is reduced. For a rough guide of when to perform the measurement, the measurement is performed 2 weeks after the application of a stress.

Stresses to which a plant is exposed can be classified according to parameters specific to the cultivation conditions. A stress resulting from the salt concentration (measured according to the EC value described below) of a soil or a culture solution may be referred to as a salt stress, a stress resulting from the moisture content (measured according to the pF value described below) of a soil may be referred to as a drying stress, a stress resulting from the temperature of a cultivation environment may be referred to as a temperature stress, a stress resulting from the pH of a soil may be referred to as a pH stress, a stress resulting from the oxygen concentration of a soil may be referred to as an oxygen stress, a stress resulting from physical obstruction may be referred to as an obstruction stress, a stress resulting from a pest may be referred to as a pest stress, a stress resulting from light intensity may be referred to as a light stress, a stress resulting from the firmness of a soil may be referred to as a mechanical stress, a stress resulting from contact may be referred to as a contact stimulus, and so on.

For the plants cultivated in Japan, a cultivation environment that does not impose any salt stress, drying stress, and temperature stress has an EC value greater than 0.5 S/cm and less than 1.2 mS/cm for soil culture or an EC value greater than 0.6 mS/cm and less than 2.7 mS/cm for hydroponic culture, a pF value greater than 1.5 and less than 2.7, and a temperature greater than 20°C and less than 25°C, respectively. Hereinbelow, the effects of the plant stress tolerance imparting composition of the present invention are described using as examples plants for which such a cultivation environment is a stress-free environment.

For the plants cultivated in tropical regions, a cultivating environment that does not impose a temperature stress has a temperature greater than 25°C and less than 35°C. For the plants cultivated in arid regions, a cultivating environment that does not impose a drying stress has a pF value greater than 2.7 and less than 4.2. If the plants for which these environments are stress-free cultivation environments are cultivated in Japan where the cultivation environment has a temperature greater than 20°C and less than 25°C and a pF value greater than 1.5 and less than 2.7, the plants will be in the state of being temperature-stressed and drying-stressed. It is expected that use of the plant stress tolerance imparting composition of the present invention on such plants may enable products exclusive to tropical regions or arid regions to grow in the aforementioned cultivation environment of Japan.

Herein, the "plant stress tolerance imparting composition" refers to a composition for alleviating a stress on a plant that is applied to the plant in a growth environment that imposes the stress on the plant.

The inventors have newly found that a composition that contains as a principal ingredient a specific sugar derivative-type surfactant that barely exhibits a plant energizing ability in a growth environment that is optimum to a plant exhibits a surprising ability to alleviate a stress in the aforementioned environments that impose stresses on the plant. Based on this finding, the inventors have accomplished a plant stress tolerance imparting agent that enables plant growth to be achieved comparably with the growth attained in the optimum growth environment.

The plant stress tolerance imparting composition of the present invention enables plants to favorably grow in a season and a soil that are different from the season and the soil optimum for the plants to grow naturally. Therefore, an industrial benefit, i.e., such plants can be produced throughout the year in any soil regardless of a specific season or soil, can be provided.

That is, the plant stress tolerance imparting composition of the present invention is a plant stress tolerance imparting composition containing a sugar derivative-type surfactant and water, and the sugar derivative-type surfactant contains at least one sugar derivative-type surfactant having a structure selected from the group consisting of an ester of a sugar and a fatty acid, an ester of a sugar alcohol and a fatty acid, and an alkylglycoside. To allow an ability to impart stress tolerance to a plant to be suitably exhibited, the sugar derivative-type surfactant is the principal ingredient of the composition, and the sugar derivative-type surfactant is contained in an amount of 85 to 100 wt% of the total amount of the components other than water contained in the composition, preferably 90 to 100 wt%, more preferably 95 to 100 wt%, and still more preferably 100 wt%.

Sugar derivative-type surfactants

The sugar derivative-type surfactant used in the present invention (hereinafter sometimes simply referred to as a sugar derivative-type surfactant) contains, as described above, at least one sugar derivative-type surfactant having a structure selected from the group consisting of an ester of a sugar and a fatty acid, an ester of a sugar alcohol and a fatty acid, and an alkylglycoside. It is presumed that, since such a sugar derivative-type surfactant has a sugar or sugar alcohol backbone, it promotes an osmotic adjustment in the cell, enabling stress tolerance to be imparted.

Herein, the "sugar" in the "ester of a sugar and a fatty acid" is a monosaccharide or a disaccharide. For the ester of a fatty acid to produce a good plant stress tolerance imparting effect, the monosaccharide preferably is glucose, galactose, xylose, mannose, lixose, arabinose, or a mixture of these, and the disaccharide preferably is maltose, xylobiose, isomaltose, cellobiose, gentiobiose, lactose, sucrose, nigerose, turanose, or a mixture of these. More preferably, the sugar is glucose, fructose, maltose, sucrose, or a mixture of these, still more preferably glucose, sucrose, or a mixture of these, and particularly more preferably sucrose.

Herein, the "sugar alcohol" in the "ester of a sugar alcohol and a fatty acid" preferably is, for the ester of a fatty acid to produce a good plant stress tolerance imparting effect, glycerol, erythritol, threitol, arabinitol, xylitol, ribitol, iditol, galactitol, sorbitol (sorbit), mannitol, or the like; more preferably sorbitol (sorbit), glycerol, erythritol, or mannitol; still more preferably sorbitol (sorbit) or glycerol; and particularly more preferably sorbitol (sorbit).

Herein, examples of the "fatty acid" in the "ester of a sugar and a fatty acid" and the "ester of a sugar alcohol and a fatty acid" include saturated fatty acids and unsaturated fatty acids. The saturated fatty acids preferably are, for the ester of a sugar or a sugar alcohol to produce a good plant stress tolerance imparting effect, butanoic acid (butyric acid), pentanoic acid (valeric acid), hexanoic acid (caproic acid), heptanoic acid, octanoic acid (capric acid), nonanoic acid, decanoic acid (capric acid), dodecanoic acid (lauric acid), tetradecanoic acid (myristic acid), pentadecanoic acid, hexadecanoic acid (palmitic acid), octadecanoic acid (stearic acid), and the like. The unsaturated fatty acids preferably are, for the ester of a sugar or a sugar alcohol to produce a good plant stress tolerance imparting effect, hexadecenoic acid (palmitoyl acid), cis-9-octadecenoic acid (oleic acid), octadecadienoic acid (linolic acid), and the like. More preferably, the fatty acids are dodecanoic acid (lauric acid), hexadecanoic acid (palmitic acid), octadecanoic acid (stearic acid), and cis-9-octadecenoic acid (oleic acid); still more preferably dodecanoic acid (lauric acid) and cis-9-octadecenoic acid (oleic acid); and particularly more preferably dodecanoic acid (lauric acid).

The ester of a sugar and a fatty acid preferably is, for the ester of a sugar and a fatty acid to produce a good plant stress tolerance imparting effect, the ester of an aforementioned preferable sugar and an aforementioned preferable fatty acid. In particular, the ester of a sugar and a fatty acid preferably is a sucrose fatty acid ester. An example of the sucrose fatty acid ester is an ester of sucrose and a fatty acid such as a saturated fatty acid or an unsaturated fatty acid. The ester may be a monoester, a diester, a triester, a polyester (such as an ester having 4 or more esterified sites (e.g., tetraester)), or a mixture of these. Examples of an ester of a saturated fatty acid and sucrose include a sucrose stearic acid ester, a sucrose palmitic acid ester, a sucrose myristic acid ester, a sucrose lauric acid ester, and the like. An example of an ester of an unsaturated fatty acid and sucrose is a sucrose oleic acid ester or the like. An example of an ester of sucrose and a mixture of a saturated fatty acid and a fatty acid is an ester of sucrose and a mixture of oleic acid, palmitic acid and stearic acid. The sucrose fatty acid ester preferably is a sucrose stearic acid ester, a sucrose palmitic acid ester, or a sucrose oleic acid ester; and more preferably a sucrose stearic acid ester. The sucrose fatty acid ester has an HLB value of, for example, 1 to 18 and preferably 10 to 18.

The ester of a sugar alcohol and a fatty acid preferably is, for the ester of a sugar alcohol and a fatty acid to produce a good plant stress tolerance imparting effect, the ester of an aforementioned preferable sugar alcohol and an aforementioned preferable fatty acid. In particular, the ester of a sugar alcohol and a fatty acid preferably is an ester of a sugar alcohol and a fatty acid such as a saturated fatty acid or an unsaturated fatty acid. The ester may be a monoester, a diester, a triester, a polyester (such as an ester having 4 or more esterified sites (e.g., tetraester)), or a mixture of these. Examples of the ester of a sugar alcohol and a fatty acid include a sorbitan fatty acid ester, a polyoxyalkylene sorbitan fatty acid ester, a sorbit fatty acid ester, a polyoxyalkylene sorbit fatty acid ester, a glycerol fatty acid ester, a polyglycerol fatty acid ester, and a polyoxyalkylene glycerol fatty acid ester. For imparting stress tolerance, the ester of a sugar alcohol and a fatty acid has an HLB value of, for example, 1 to 17, preferably 4 to 17, and more preferably 10 to 17.

The sorbitan fatty acid ester preferably is, for the sorbitan fatty acid ester to produce a good plant stress tolerance imparting effect, an ester of a saturated fatty acid and sorbitan such as sorbitan monolaurate (sorbitan monolauric acid ester), sorbitan monopalmitate (sorbitan monopalmitic acid ester), sorbitan monostearate (sorbitan monostearic acid ester), sorbitan distearate (sorbitan distearic acid ester), sorbitan monolaurate (sorbitan monolauric acid ester), sorbitan distearate (sorbitan distearic acid ester) or sorbitan tristearate (sorbitan tristearic acid ester), or an ester of an unsaturated fatty acid and sorbitan such as sorbitan monooleate (sorbitan monooleic acid ester) or sorbitan trioleate (sorbitan trioleic acid ester); more preferably sorbitan monooleate (sorbitan monooleic acid ester), sorbitan monolaurate (sorbitan monolauric acid ester), sorbitan monopalmitate (sorbitan monopalmitic acid ester), or sorbitan monostearate (sorbitan monostearic acid ester); still more preferably sorbitan monooleate (sorbitan monooleic acid ester) or sorbitan monolaurate (sorbitan monolauric acid ester); and particularly more preferably sorbitan monolaurate (sorbitan monolauric acid ester). The sorbitan fatty acid ester may be a monoester, a diester, a triester, a polyester (such as an ester having 4 or more esterified sites (e.g., tetraester)), or a mixture of these, but it is preferable that the monoester accounts for a large proportion. The HLB value of the sorbitan fatty acid ester preferably is 3 to 10.

In the polyoxyalkylene sorbitan fatty acid ester, alkylene oxide is added to an ester of sorbitan and a fatty acid or a like compound. The molar number of alkylene oxide added preferably is 1 to 60 mol per mole of an ester of sorbitan and a fatty acid, more preferably 2 to 40 mol, and still more preferably 5 to 20 mol. The polyoxyalkylene sorbitan fatty acid ester preferably is, for producing a good plant stress tolerance imparting effect, polyoxyethylene sorbitan monolaurate (POE sorbitan monolauric acid ester), polyoxyethylene sorbitan monopalmitate (POE sorbitan monopalmitic acid ester), polyoxyethylene sorbitan monostearate (POE sorbitan monostearic acid ester), polyoxyethylene sorbitan tristearate (POE sorbitan tristearic acid ester), polyoxyethylene sorbitan triisostearate (POE sorbitan triisostearic acid ester) or a like compound in which alkylene oxide is added to an ester of sorbitan and a saturated fatty acid, or polyoxyethylene sorbitan monooleate (POE sorbitan monooleic acid ester) or a like compound in which alkylene oxide is added to an ester of sorbitan and an unsaturated fatty acid; more preferably polyoxyethylene sorbitan monolaurate (POE sorbitan monolauric acid ester), polyoxyethylene sorbitan monopalmitate (POE sorbitan monopalmitic acid ester), polyoxyethylene sorbitan monostearate (POE sorbitan monostearic acid ester), or polyoxyethylene sorbitan monooleate (POE sorbitan monooleic acid ester); still more preferably polyoxyethylene sorbitan monolaurate (POE sorbitan monolauric acid ester) or polyoxyethylene sorbitan monooleate (POE sorbitan monooleic acid ester); and particularly more preferably polyoxyethylene sorbitan monolaurate (POE sorbitan monolauric acid ester).

The sorbit fatty acid ester preferably is, for the sorbitan fatty acid ester to produce a good plant stress tolerance imparting effect, an ester of a saturated fatty acid and sorbit such as sorbit monolaurate (sorbit monolauric acid ester), sorbit monopalmitate (sorbit monopalmitic acid ester), sorbit monostearate (sorbit monostearic acid ester), sorbit distearate (sorbit distearic acid ester), sorbit dilaurate (sorbit dilauric acid ester) or sorbit distearate (sorbit distearic acid ester), or an ester of an unsaturated fatty acid and sorbit such as sorbit monooleate (sorbit monooleic acid ester) or sorbit trioleate (sorbit trioleic acid ester); more preferably sorbit monolaurate (sorbit monolauric acid ester), sorbit monopalmitate (sorbit monopalmitic acid ester), sorbit monostearate (sorbit monostearic acid ester), or sorbit monooleate (sorbit monooleic acid ester); still more preferably sorbit monolaurate (sorbit monolauric acid ester) or sorbit monooleate (sorbit monooleic acid ester); and particularly more preferably sorbit monolaurate (sorbit monolauric acid ester).

In the polyoxyalkylene sorbit fatty acid ester, alkylene oxide is added to an ester of sorbit and a fatty acid or a like compound. The molar number of alkylene oxide added preferably is 1 to 60 mol per mole of an ester of sorbit and a fatty acid, more preferably 2 to 40 mol, and still more preferably 5 to 20 mol.

The polyoxyalkylene sorbit fatty acid ester preferably is, for the polyoxyalkylene sorbit fatty acid ester to produce a good plant stress tolerance imparting effect, polyoxyethylene sorbit monolaurate (POE sorbit monolauric acid ester), polyoxyethylene sorbit monopalmitate (POE sorbit monopalmitic acid ester), polyoxyethylene sorbit monostearate (POE sorbit monostearic acid ester), polyoxyethylene sorbit tristearate (POE sorbit tristearic acid ester), polyoxyethylene sorbit triisostearate (POE sorbit triisostearic acid ester) or a like compound in which alkylene oxide is added to an ester of sorbit and a saturated fatty acid, or polyoxyethylene sorbit monooleate (POE sorbit monooleic acid ester), polyoxyethylene sorbit tetraoleate (POE sorbit tetraoleic acid ester) or a like compound in which alkylene oxide is added to an ester of sorbit and an unsaturated fatty acid; more preferably polyoxyethylene sorbit tetraoleate (POE sorbit tetraoleic acid ester), polyoxyethylene sorbit monolaurate (POE sorbit monolauric acid ester), polyoxyethylene sorbit monopalmitate (POE sorbit monopalmitic acid ester), or polyoxyethylene sorbit monostearate (POE sorbit monostearic acid ester); still more preferably polyoxyethylene sorbit tetraoleate (POE sorbit tetraoleic acid ester) or polyoxyethylene sorbit monolaurate (POE sorbit monolauric acid ester); and particularly more preferably polyoxyethylene sorbit tetralaurate (POE sorbit tetralauric acid ester).

The glycerol fatty acid ester preferably is, for the glycerol fatty acid ester to produce a good plant stress tolerance imparting effect, an ester of a saturated fatty acid and glycerol such as glycerol monolaurate (glycerol monolauric acid ester), glycerol monopalmitate (glycerol monopalmitic acid ester), glycerol monostearate (glycerol monostearic acid ester), glycerol distearate (glycerol distearic acid ester), glycerol dilaurate (glycerol dilauric acid ester) or glycerol distearate (glycerol distearic acid ester), or an ester of an unsaturated fatty acid and glycerol such as glycerol monooleate (glycerol monooleic acid ester); more preferably glycerol monostearate (glycerol monostearic acid ester), glycerol monooleate (glycerol monooleic acid ester), glycerol monolaurate (glycerol monolauric acid ester), or glycerol monopalmitate (glycerol monopalmitic acid ester); still more preferably glycerol monostearate (glycerol monostearic acid ester) or glycerol monolaurate (glycerol monolauric acid ester); and particularly more preferably glycerol monolaurate (glycerol monolauric acid ester).

The polyglycerol fatty acid ester is an ester of a fatty acid and polyglycerol, which is polymerized glycerol. For the polyglycerol fatty acid ester, glycerol may be polymerized to various degrees, various types of fatty acid may be used, and various degrees of esterification may be selected. The polyglycerol fatty acid ester preferably is, for the polyglycerol fatty acid ester to produce a good plant stress tolerance imparting effect, an ester of polyglycerol and a saturated fatty acid such as tetraglycerol stearate (tetraglycerol stearic acid ester), decaglycerol laurate (decaglycerol lauric acid ester) or decaglycerol stearate (decaglycerol stearic acid ester), or an ester of polyglycerol and an unsaturated fatty acid such as decaglycerol oleate (decaglycerol oleic acid ester).

The polyoxyalkylene glycerol fatty acid ester preferably is, for the polyoxyalkylene glycerol fatty acid ester to produce a good plant stress tolerance imparting effect, monostearic acid polyoxyethylene glyceryl or monooleic acid polyoxyethylene glyceryl.

The ester of a sugar alcohol and a fatty acid preferably is, for producing a good plant stress tolerance imparting effect, a sorbitan fatty acid ester, a polyoxyalkylene sorbitan fatty acid ester, a polyoxyalkylene sorbit fatty acid ester, a glycerol fatty acid ester, or the like; more preferably a polyoxyalkylene sorbitan fatty acid ester; still more preferably polyoxyethylene sorbitan monolaurate (for example, POE (20) sorbitan monolauric acid ester), polyoxyethylene sorbitan monopalmitate (for example, POE (20) sorbitan monopalmitic acid ester), polyoxyethylene sorbitan monostearate (for example, POE (20) sorbitan monostearic acid ester), or polyoxyethylene sorbitan monooleate (for example, POE (20) sorbitan monooleic acid ester, POE (6) sorbitan monooleic acid ester); yet more preferably polyoxyethylene sorbitan monolaurate or polyoxyethylene sorbitan monooleate; and particularly more preferably polyoxyethylene sorbitan monolaurate.

The alkylglycoside is represented by, for example, Formula (1) below:

$$R^1(OR^2)_xG_y \qquad (1)$$

wherein $R^1$ represents a linear or branched $C_{8-18}$ alkyl group, alkenyl group, or alkylphenyl group; $R^2$ represents a $C_{2-4}$ alkylene group; G represents a residue derived from a $C_{5-6}$ reducing sugar; x (average) represents 0 to 5; and y (average) represents 1 to 5.

In the formula, x preferably is 0 to 2 and more preferably 0, and y preferably is 1 to 1.5 and more preferably 1 to 1.4. The number of carbon atoms of $R^1$ preferably is 9 to 16 and more preferably 10 to 14. $R^2$ preferably is an ethylene group. The structure of G is determined by the reducing sugar, such as a monosaccharide or a polysaccharide, used as the starting material therefor. Monosaccharides include glucose, galactose, xylose, mannose, lixose, arabinose, a mixture of these, and the like. Polysaccharides include maltose, xylobiose, isomaltose, cellobiose, gentiobiose, lactose, sucrose, nigerose, turanose, a mixture of these, and the like. Among these saccharides, preferable monosaccharides are glucose and fructose for their availability and low cost, and glucose is the more preferable. Preferable polysaccharides are maltose and sucrose. Proton ($^IH$) NMR is used to determined x and y.

The alkylglycoside of Formula (1) above refers to, in other words, a compound in which the hydrogen of the hydroxyl group on the 1 position of a sugar derivative-type from a $C_{5-6}$ reducing sugar, i-e., a $C_{5-6}$ monosaccharide or polysaccharide, is replaced with $R^1$, and x hydroxyl groups are replaced with $OR^2$.

The alkylglycoside is not particularly limited insofar as it satisfies Formula (1) above, and alkyl polyglucoside is preferable for producing a good plant stress tolerance imparting effect and, in particular, $C_{10}$ alkyl polyglucoside, $C_{12}$ alkyl polyglucoside, $C_{14}$ alkyl polyglucoside, myristyl polyglucoside, and a mixture of these are more preferable, and among these, $C_{10}$ alkyl polyglucoside is still more preferable.

The sugar derivative-type surfactant preferably is an ester of a saturated fatty acid and sucrose or an ester of an unsaturated fatty acid and sucrose; an ester of a saturated fatty acid and sorbitan or an ester of an unsaturated fatty acid and sorbitan; a polyoxyalkylene sorbitan fatty acid ester in which alkylene oxide is added to an ester of sorbitan and a saturated fatty acid or a polyoxyalkylene sorbitan fatty acid ester in which alkylene oxide is added to an ester of sorbitan and an unsaturated fatty acid; a polyoxyalkylene sorbit saturated fatty acid ester; an ester of a saturated fatty acid and glycerol; or decylpolyglucoside, dodecylpolyglucoside, dodecylpolyglucoside, tetradecylpolyglucoside, or a mixture of these; more preferably, a sucrose stearic acid ester, a sucrose palmitic acid ester, or a sucrose oleic acid ester; sorbitan monooleate; polyoxyethylene sorbitan monolaurate, polyoxyethylene sorbitan monopalmitate, polyoxyethylenesorbitan monostearate, or polyoxyethylene sorbitan monooleate; tetraoleic acid polyoxyethylene sorbit; glycerol monostearate; or decylpolyglucoside, dodecylpolyglucoside, dodecylpolyglucoside, tetradecylpolyglucoside, or a mixture of these; still more preferably, polyoxyethylene sorbitan monolaurate, polyoxyethylene sorbitan monopalmitate, polyoxyethylenesorbitan monostearate, or polyoxyethylene sorbitan monooleate; yet more preferably, polyoxyethylene sorbitan monolaurate or polyoxyethylene sorbitan monooleate; and particularly more preferably polyoxyethylene sorbitan monolaurate.

The concentration of the sugar derivative-type surfactant, e.g., the concentration when the tolerance imparting composition of the present invention is applied to a plant body by being sprayed onto leaves, preferably is 0.01 to 10000 ppm, more preferably 0.1 to 5000 ppm, and still more preferably 1 to 2000 ppm of the composition. When the composition is applied to an underground portion in soil culture or in hydroponic culture, the concentration preferably is 0.01 to 10000 ppm, more preferably 0.1 to 2000 ppm, and still more preferably 1 to 1000 ppm.

Additional surfactants

In the present invention, in conjunction with the sugar derivative-type surfactant, additional surfactants (excluding sugar derivative-type surfactants) can be used. The optional use of additional surfactants dramatically enhances the wettability of the sugar derivative-type surfactant over the plant surface, the adhesion of the sugar derivative-type surfactant to the plant surface, and the permeability of the sugar derivative-type surfactant through the plant surface. As a result, the effect of the sugar derivative-type surfactant is enhanced or exhibited efficiently, enabling the sugar derivative-type surfactant to be used at a reduced concentration.

Such additional surfactants include nonionic surfactants, anionic surfactants, carboxylic acid-based surfactants, sulfonic acid-based surfactants, sulfuric acid ester-based surfactants, phosphoric acid ester-based surfactants, ampholytic surfactants, and the like.

The nonionic surfactants inlcude resin acid esters, polyoxyalkylene resin acid esters, polyoxyalkylene alkyl ethers, polyoxyalkylene alkylphenyl ethers, alkyl alkanol amides, and the like.

The anionic surfactants include carboxylic acid-based, sulfonic acid-based, sulfuric acid ester-based, and phosphoric acid ester-based surfactants. For the anionic surfactants, at least one surfactant selected from carboxylic acid-based and phosphoric acid ester-based surfactants is preferable.

Examples of the carboxylic acid-based surfactants include $C_{6-30}$ fatty acids or salts thereof, polyhydric carboxylic acid salts, polyoxyalkylene alkyl ether carboxylic acid salts, polyoxyalkylene alkylamide ether carboxylic acid salts, rosin acid salts, dimer acid salts, polymer acid salts, tall oil fatty acid salts, esterified modified starch, and the like. For the carboxylic acid-based surfactants, esterified modified starch is preferable and alkenyl-suocinated modified starch is more preferable.

Examples of the sulfonic acid-based surfactants include alkylbenzenesulfonic acid salts, alkylsulfonic acid salts, alkylnaphthalenesulfonic acid salts, naphthalenesulfonic acid salts, diphenyl ether sulfonic acid salts, salts of condensates of alkylnaphthalenesulfonic acid, salts of condensates of naphthalenesulfonic acid, and the like.

Examples of the sulfuric acid ester-based surfactants include salts of alkyl sulfuric acid esters, salts of polyoxyalkylene alky sulfuric acid esters, salts of polyoxyalkylene alkyl phenyl ether sulfuric acids, salts of tristyrenated phenol sulfuric acid esters, salts of polyoxyalkylene distyrenated phenol sulfuric acid esters, and the like.

Examples of the phosphoric acid ester-based surfactants include salts of alkyl phosphoric acid esters, salts of alkylphenyl phosphoric acid esters, salts of polyoxyalkylene alkyl phosphoric acid esters, salts of polyoxyalkylene alkylphenyl phosphoric acid esters, and the like. Examples of salts include metal (such as Na, K, Ca, Mg, or Zn) salts, ammonium salts, alkanolamine salts, aliphatic amine salts, and the like.

The ampholytic surfactants include amino acid-based, imidazoline-based, and amine oxide-based surfactants.

Examples of the amino acid-based ampholytic surfactants include acylamino acid salts, acylsarcosine acid salts, acyloyl methylaminopropionic acid salts, alkylaminopropionic acid salts, acylamidoethylhydroxyethylmethylcarboxylic acid salts, and the like.

Examples of the amine oxide-based ampholytic surfactants include alkyldimethylamine oxide, alkyldiethanolamine oxide, alkylamidepropylamine oxide, and the like.

The concentration of additional surfactant in the tolerance imparting composition, e.g., the concentration when the composition is applied to a plant body by being sprayed onto leaves, preferably is 0.1 to 10000 ppm, more preferably 1 to 5000 ppm, and still more preferably 10 to 1000 ppm. When the composition is applied to an underground portion in soil culture or in hydroponic culture, the concentration preferably is 0.01 to 5000 ppm, more preferably 0.1 to 1000 ppm, and still more preferably 1 to 500 ppm.

The amount of additional surfactant is, for example, 0.1 to 25 wt% and preferably 1 to 10 wt% of the total amount of the components other than water contained in the tolerance imparting composition.

Chelating agents

The tolerance imparting composition of the present invention may further contain a chelating agent. The presence of a chelating agent can dramatically enhance the stability of the plant stress tolerance imparting composition of the present invention that contains an aforementioned sugar derivative-type surfactant and water, thereby enabling the tolerance imparting composition to stably produce a stress tolerance imparting effect. Examples of the chelating agent include organic acids that have a chelating ability and salts thereof. Specific examples of the chelating agent include polyhydric carboxylic acids, oxycarboxylic acids, salts of polyhydric carboxylic acids, salts of oxycarboxylic acids, and the like. The polyhydric carboxylic acids include oxalic acid, malonic acid, succinic acid, fumaric acid, maleic acid, adipic acid, glutaric acid, and the like. The oxycarboxylic acids include citric acid, gluconic acid, malic acid, heptonic acid, lactic acid, tartaric acid, and the like. The polyhydric carboxylic acid salts include salts of polyhydric carboxylic acids and alkali metals (such as potassium and sodium), salts of polyhydric carboxylic acids and alkanolamines, salts of polyhydric carboxylic acids and aliphatic amines, and the like. The oxycarboxylic acid salts include salts of oxycarboxylic acids and alkali metals (such as potassium and sodium), salts of oxycarboxylic acids and alkanolamines, salts of oxycarboxylic acids and aliphatic amines, and the like. These chelating agents may be mixed with inorganic chelating agents. Examples of the inorganic chelating agents include aminocarboxylic acid-based chelating agents such as ethylenediaminetetraacetic acid (EDTA) and salts thereof, nitrilotriacetic acid (NTA) and salts thereof, 1,2-cyclohexanediaminetetraacetic acid monohydrate (CDTA) and salts thereof, and the like.

The concentration of chelating agent in the tolerance imparting composition, e.g.; the concentration when the composition is applied to a plant body by being sprayed onto leaves, preferably is 0.1 to 10000 ppm, more preferably 1 to 5000 ppm, and still more preferably 10 to 1000 ppm. When the composition is applied to an underground portion in soil culture or in hydroponic culture, the concentration preferably is 0.1 to 10000 ppm, more preferably 1 to 5000 ppm, and still more preferably 10 to 1000 ppm.

The amount of chelating agent is, for example, 0.1 to 25 wt% and preferably 1 to 10 wt% of the total amount of the components other than water contained in the tolerance imparting composition.

Fertilizer components

The tolerance imparting composition of the present invention may further contain a fertilizer component. Examples of the fertilizer component include N, P, K, Ca, Mg, S, B, Fe, Mn, Cu, Zn, Mo, Cl, Si, Na, and the like, as well as inorganic substances and organic substances that can be the sources of N, P, K, Ca, and Mg. The inorganic substances include ammonium nitrate, potassium nitrate, ammonium sulfate, ammonium chloride, ammonium phosphate, sodium nitrate, urea, ammonium carbonate, potassium phosphate, calcium superphosphate, fused magnesium phosphate ($3MgO \cdot CaO \cdot P_2O_5 \cdot 3CaSiO_2$), potassium sulfate, potassium chloride, calcium nitrate, calcium hydroxide, calcium carbonate, magnesium sulfate, magnesium hydroxide, magnesium carbonate, and the like. The organic substances include poultry manure, cattle manure, bark compost, peptone, amino acid solutions (Mieki), fermentation extracts, calcium salts of organic acids (such as citric acid, gluconic acid, and succinic acid), and calcium salts of fatty acids (such as formic acid, acetic acid, propionic acid, caprylic acid, capric acid, and caproic acid). These fertilizer components may be used in conjunction with surfactants. For a cultivation form in which fertilizer components are supplied by irrigation to reduce the excessive application of fertilizers at the time of sowing, such as fertigation or hydroponic culture, it is preferable that the tolerance imparting composition of the present invention further contains a fertilizer component.

A preferable concentration of fertilizer component in the tolerance imparting composition when the composition is applied to a plant body by being sprayed onto leaves, is 0.1 to 5000 ppm for N, P, and K each, more preferably 1 to 1000 ppm, and still more preferably 10 to 500 ppm. When the composition is applied to an underground portion in soil culture or in hydroponic culture, a preferable concentration is 0.1 to 5000 ppm for N, P, and K each, more preferably 1 to 1000 ppm, and still more preferably 10 to 500 ppm. Moreover, a preferable total concentration of fertilizer component when the composition is applied by being sprayed onto leaves is 1 to 10000 ppm for N, P, and K combined, more preferably 10 to 5000 ppm, and still more preferably 50 to 2000 ppm. A preferable total concentration of fertilizer component when the composition is applied to an underground portion in soil culture or in hydroponic culture is 1 to 10000 ppm for N, P, and K combined, more preferably 10 to 5000 ppm, and still more preferably 50 to 2000 ppm.

The amount of fertilizer component is, for example, 0.1 to 90 wt% and preferably 1 to 50 wt% of the total amount of the components other than water contained in the tolerance imparting composition.

The method for imparting stress tolerance to a plant of the present invention includes the step of applying the plant stress tolerance imparting composition of the present invention to a plant placed under stressful cultivation conditions that yield a plant stress level of 111 to 200%. In the method, the tolerance imparting composition may be applied to the portion appearing above the ground and/or the portion buried under the ground of the plant.

Whether a plant has been provided with stress tolerance can be determined by calculating the extent of imparting plant stress tolerance (%) according to Formula (iii) below using the plant body weight of a plant that has been cultivated under a stressful cultivation condition that yields the aforementioned plant stress level (plant body weight 1) and the plant body weight of a plant that has received the plant stress tolerance imparting composition of the present invention through the underground portion or the above-ground portion and that has been cultivated (plant body weight 3: the weight of a plant body after performing a stress tolerance imparting treatment on a plant cultivated under stress). An extent of imparting plant stress tolerance exceeding 100% means that a plant has been provided with stress tolerance, and it is preferably 105% or greater and more preferably 111% or greater.

$$\text{Extent of imparting plant stress tolerance (\%)} = (\text{Plant body weight 3} / \text{Plant body weight 1}) \times 100 \qquad \text{(iii)}$$

Use of the plant stress tolerance imparting composition of the present invention can achieve an extent of imparting plant stress tolerance exceeding 110% in the case where a plant is cultivated under cultivation conditions including stress factors such as salt, temperature, and dryness.

In the present invention, a standard extent of imparting plant salt stress tolerance as measured according to the standard test described below preferably is 111% or greater, and this can be used as a criteria for determining whether a compound can impart stress tolerance or not. During actual cultivation on farm land or in a like place, a plant is exposed to various types of stress. In the standard test, a specific stressful environment is simulated in a laboratory or a like facility, and the stress tolerance imparting effect of a test compound is examined. A plant stress tolerance imparting composition that has a standard extent of imparting plant salt stress tolerance of preferably 111% or greater may be applied to the above-ground portion or the underground portion of a plant. A standard test for measuring a standard extent of imparting plant salt tolerance is described below (here, control plot 2 is also prepared).

Standard test

(I) Plant preparation

A 50-cell tray is filled with potting soil (fertilizer components: N:P:K = 0.4:1.9:0.6 (g)/kg potting soil); and seeds of a "Momotaro" tomato (Takii Co., Ltd.) are sowed, thinly covered with potting soil, and sufficiently irrigated to allow the seeds to sprout. When the leaves in the 2-leaf stage are fully unfolded, the soil on the tomato roots is washed away with running water, and a test is performed. For the potting soil, Kureha gardening soil manufactured by Kureha Corporation may be used.

(II) Test condition setting

The environmental conditions are controlled such that the temperature is 23°C, the relative humidity is 50%, the illuminance is 5000 Lux, and the daily light-dark cycle includes a 16-hour light period and an 8-hour dark period. Such environmental conditions can be obtained by, for example, controlling the temperature in a room or a climate chamber where the temperature and the relative humidity can be controlled, and controlling illuminance by a fluorescent light or the like. A tomato as prepared above is transplanted in a container (such as a polyethylene container) containing 250 ml of a solution culture medium (in which NaCl is added to tap water so as to give a concentration of 3510 ppm (water potential by NaCl of 0.29 MPa)).

(III) Treatment with plant stress tolerance imparting composition

A test plot, control plot 1, and control plot 2 as described below are prepared.
Ten specimens are prepared for each of the test plot, control plot 1, and control plot 2 (total 30 specimens), and the fresh weight of all plant bodies after 2 weeks is measured. A known surfactant or a like material that barely affects the plant may be used in the preparation of an aqueous dispersion.
Test plot: An aqueous solution or an aqueous dispersion of a test compound (sugar derivative-type surfactant) (concentration: 100 ppm) is sprayed onto the leaves in an amount of 10 ml per tomato specimen.
Control plot 1: NaCl is added to a solution culture medium (creating a salt stress), but no test compound (plant stress tolerance imparting composition) is given to the tomato. Control plot 2: No NaCl is added to a solution culture medium (creating no salt stress), and no test compound (plant stress tolerance imparting composition) is given to the tomato.

(IV) Calculation of standard extent of imparting plant salt stress tolerance (%)

A standard extent of imparting plant salt stress tolerance is calculated as described below using the average of the fresh weights of all plant bodies thus obtained (Formula (i)).

$$\text{Standard extent of imparting plant salt stress tolerance (\%)} = (\text{Fresh weight of plant bodies of test plot} / \text{Fresh weight of plant bodies of control plot 1}) \times 100 \quad \text{(i)}$$

The plant stress level (standard plant salt stress level) attained in the above-described standard test is about 130%. In this regard, the standard plant salt stress level can be calculated according to Formula (ii)' below.

$$\text{Standard plant salt stress level (\%)} = (\text{Fresh weight of plant bodies of control plot 2} / \text{Fresh weight of plant bodies of control plot 1}) \times 100 \quad \text{(ii)'}$$

The above-described stressful cultivation condition is a cultivation condition including at least one stress factor selected from a salt stress resulting from the salt concentration in the soil or the culture solution, a drying stress resulting from the moisture content of the soil, and a temperature stress resulting from the temperature of the cultivation environment.
In soil culture or hydroponic culture, an accumulation of salts that are contained in, for example, fertilizers increases the osmotic pressure of a culture solution and prevents a plant from absorbing water, and as a result a phenomenon in which the growth is inhibited occurs. Such a situation is generally understood that a plant is in a salt-stressed state. Specifically, it can be said that it includes a salt stress condition such that, for example, the osmotic potential due to the salts contained in a solution culture medium in hydroponic culture or the osmotic potential due to the salts contained in a soil in soil culture is 0.2 MPa (NaCl concentration of 2400 ppm) or greater, particularly 0.25 MPa or greater, and more particularly 0.30 MPa or greater. According to the present invention, it is possible to impart tolerance to a plant so that the plant properly grows under a condition that has such an osmotic potential. The osmotic potential in soil culture is calculated according to Raoult's law presented below once a soil is diluted with water and the supernatant is analized for salt concentration.
Raoult's law:

$\Pi(\text{atm}) = cRT$
$R = 0.082$ (L·atm/mol·K)
T = absolute temperature (K)
c = molar concentration of ion (mol/L)
1 atm = 0.1 MPa

The aforementioned salt stress is a salt stress resulting from, for example, a soil EC value of 1.2 to 3.4 mS/cm in soil culture or an EC value of 2.7 to 5.0 mS/cm in hydroponic culture. The EC value is an index of salt ion concentration and refers to the reciprocal of the specific resistance of a solution, and the reciprocal of the value of the specific resistance of the solution over a distance of 1 cm is expressed in mS. In a method for measuring EC, the electroconductivity of a solution created by diluting an air-dried soil with distilled water in a weight ratio of 1 to 5 in the case of soil or an undiluted solution in the case of hydroponic culture is measured with a conductance meter.

In soil culture, when the moisture content of a soil is reduced due to a decrease in the amount of rainfall or the amount of water for irrigation, the amount of water a plant can absorb is reduced, and as a result a phenomenon in which growth is inhibited occurs. Such a situation is generally understood that a plant is in a drying-stressed state. Specifically, it can be said that a drying stress is present such that the pF value of a soil in which a plant is cultivated is no less than 1.7 at which gravitational water cannot be considered as soil moisture, particularly 2.3 or greater, or more particularly 2.5 or greater. According to the present invention, it is possible to impart tolerance to a plant so that the plant properly grows under a condition that has such a pF value. Here, the pF value can be measured according to the principle described in the "Method for pF Value Measurement" on pages 61 and 62 of "Dojyo, Shokubutu Eiyo, Kankyo Jiten (Encyclopedia of Soil, Plant Nutrition, and Environment)" (Matsuzaka et al., Taiyosha Co., Ltd., 1994). The aforementioned drying stress is a drying stress resulting from a soil pF value of, for example, 2.7 to 4.2, preferably 2.7 to 4.1, and more preferably 3.0 to 4.1. The measurement of a pF value can be performed with a soil water meter (for example, pF Meter DIK-8343 manufactured by Daiki Rika Kogyo Co., Ltd., or a like device) produced according to the principle of the method for a pF value measurement described in "Dojyo, Shokubutu Eiyo, Kankyo Jiten (Encyclopedia of Soil, Plant Nutrition, and Environment)" (Matsuzaka et al., Taiyosha Co., Ltd., 1994).

In a cultivation environment, when a plant is exposed to a temperature higher or lower than the optimum growth temperature of the plant, a phenomenon in which the physiological metabolism is reduced and growth is inhibited occurs. Such a situation is generally understood that a plant is in a temperature-stressed state. Specifically, a condition includes a temperature stress when the average cultivation temperature of an environment where a plant is cultivated is 25°C or greater, particularly 28 to 40°C, more particularly 32 to 40°C, or 20°C or less, particularly 5 to 17°C, and more particularly 5 to 15°C. According to the plant stress tolerance imparting composition of the present invention, it is possible to impart tolerance to a plant so that the plant properly grows under a condition that has such an average cultivation temperature. Here, the average cultivation temperature refers to the average of the cultivation temperatures measured every hour regardless of day and night during the cultivation period (period from seeding to the termination of growth).

Plants to which the present invention can impart stress tolerance include fruiting vegetables, leaf vegetables, root vegetables, rice plants, cereals, flowering plants, and the like. Such fruiting vegetables include cucumber, pumpkin, watermelon, melon, tomato, eggplant, green pepper, strawberry, okra, haricots vert, faba bean, garden pea, green soybean, corn, and the like. Examples of such leaf vegetables include Chinese cabbage, vegetables for pickles, pak choy, cabbage, cauliflower, broccoli, Brussels sprout, onion, Welsh onion, garlic, Japanese shallot, leek, asparagus, lettuce, Boston lettuce, celery, spinach, crown daisy, parsely, Japanese honewort, dropwort, udo (*Aralia rhizome*), mioga (*Zingiber mioga*), butterbur, Japanese basil, and the like. Examples of such root vegetables include radish, turnip, burdock, carrot, potato, taro, sweet potato, yam, ginger, lotus, and the like.

The method for producing a plant of the present invention encompasses the method for imparting stress tolerance to a plant. Specifically, the method for producing a plant of the present invention includes the step of applying the plant stress tolerance imparting composition of the present invention to a plant placed under stressful cultivation conditions that yield a plant stress level of 111 to 200%. According to the production method, a plant placed under stressful conditions can be efficiently produced.

Example 1

Salt stress tolerance imparting test (tomato)

Test method

(1) Salt stress-free test conditions: NaCl concentration (water potential by NaCl): 0 ppm (0 MPa). Other cultivation conditions were as the same as the conditions of the drying stress test.
Salt stress conditions: NaCl concentration (water potential by NaCl): 1500 ppm (0.12 MPa), 3510 ppm (0.29 MPa), or 5000 ppm (0.41 MPa)
(2) Test conditions: temperature: 23°C, relative humidity: 50%, illuminance: 5000 Lux (fluorescent light), light/dark cycle:16 hours/8 hours
(3) Solution culture medium: Otsuka 1/2A formulation (a mixed solution of Otsuka House No. 1 (N:P:K =10:8:27) 7.5 g/10 L and Otsuka House No. 2 (N:P:K:Ca = 10:0:0:23) 5 g/10 L, total nitrogen: 130 ppm, phosphoric acid: 60 ppm, potassium: 203 ppm)
(4) Cultivation period: 2 weeks
(5) Plant preparation: A 50-cell tray was filled with Kureha gardening soil manufactured by Kureha Corporation (fertilizer components: N:P:K = 0.4:1.9:0.6 g/kg soil), and seeds of a "Momotaro" tomato were sowed, thinly covered with Kureha gardening soil, and sufficiently watered to allow the seeds to sprout. When the leaves in the 2-leaf stage fully unfolded, the soil on the tomato roots was carefully washed away with running water, and a test was performed.
(6) Test chemicals:

POE (20) sorbitan monolauric acid ester: Reodol TW-L120 (Kao Corporation)
POE (20) sorbitan monopalmitic acid ester: Reodol TW-P120 (Kao Corporation)
POE (20) sorbitan monostearic acid ester: Reodol TW-S120 (Kao Corporation)
POE (20) sorbitan monooleic acid ester: Reodol TW-0120 (Kao Corporation)
Sorbitan monooleic acid ester: Emasol O-10(F) (Kao Corporation)
POE (6) sorbitan monooleic acid ester: Reodol TW-O106 (Kao Corporation)
Alkyl (number of carbon atoms: 10) polyglucoside: AG-10LK (Kao Corporation)
Alkyl (number of carbon atoms:12 to 14) polyglucoside: AG-124 (Kao Corporation)
Sucrose fatty acid ester (number of carbon atoms: C18, HLB: 5): S-570 (Mitsubishi-Kagaku Foods Corporation)
Sucrose fatty acid ester (number of carbon atoms: C18, HLB: 9): S-970 (Mitsubishi-Kagaku Foods Corporation)
Sucrose fatty acid ester (number of carbon atoms: C18, HLB: 11): S-1170 (Mitsubishi-Kagaku Foods Corporation)
Sucrose fatty acid ester (number of carbon atoms: C18, HLB: 15): S-1570 Mtsublsln-Kagaku Foods Corporation)
Sucrose fatty acid ester (number of carbon atoms: C16, HLB: 15): P-1570 (Mitsubishi-Kagaku Foods Corporation)
Sucrose fatty acid ester (number of carbon atoms: C18:1, HLB:15): O-1570 (Mitsubishi-Kagaku Foods Corporation)

(7) Amount of treatment solution applied: 10 ml/specimen for leaf spraying, 250 ml/specsmen for hydroponic culture (treatment of underground portion)

Method of salt stress tolerance imparting test

The environmental conditions in a climatic chamber were controlled so as to have a temperature of 23°C, an illuminance by a fluorescent light of 5000 Lux, and a daily light-dark cycle of a 16-hour light period and an 8-hour dark period. A tomato as prepared above was planted in a 250 ml polyethylene bottle filled with the solution culture medium (1/2 Otsuka A formulation with a specific NaCl concentration). A treatment solution containing a compound of Table 1 in a specific concentration (the remainder was water) was prepared and sprayed onto the leaves or applied to the underground portion. In addition, a control plot to which no NaCl was added, not imposing a salt stress (this is a control plot for plant body weight 2 for Formula (ii) and is a stress-free control plot) and a control plot to which NaCl was added in various concentrations, imposing a salt stress, and to which the treatment solution was not applied (this is a control plot for plant body weight 1 for Formula (ii) and is a control plot including a salt stress) were prepared as controls. Ten specimens were prepared for each of the test plot and the control plots, and a plant stress level and an extent of imparting plant stress tolerance were calculated according to Formulas (ii) and (iii) above using as a fresh plant body weight the average of the fresh plant body weights of each specimen 2 weeks after the beginning of the test. The results thus obtained are presented in Table 1. As presented in Table 1, the plant stress level was greater than 111% in each case, indicating stress. Notably, the extent of imparting plant stress tolerance against NaCl as presented in Table 1 was clearly higher with the products of the present invention than the comparative products, exceeding 105%.

Example 2

Temperature stress tolerance imparting test (tomato)

Test method

(1) Temperature stress-free test conditions: temperature 23°C. Other cultivation conditions were the same as the conditions of the temperature stress test.
Temperature stress test conditions: temperature: 10, 15, or 32°C, relative humidity: 50%, illuminance: 5000 Lux (fluorescent light), light/dark cycle:16 hours/8 hours
(2) Solution culture medium: Otsuka 1/2A formulation (a mixed solution of Otsuka House No.1 (N:P:K =10:8:27) 7.5 g/10 L and Otsuka House No. 2 (N:P:K:Ca = 10:0:0:23) 5 g/10 L, total nitrogen: 130 ppm, phosphoric acid: 60 ppm, potassium: 203 ppm)

(3) Cultivation period: 2 weeks

(4) The preparation of a plant, the chemicals used, and the amount of a treatment solution applied were as in Example 1.

Method of temperature stress tolerance imparting test

The temperature in a climatic chamber was controlled so as to be 10, 15, or 32°C. The environmental conditions were controlled so as to have an illuminance by a fluorescent light of 5000 Lux and a daily light-dark cycle of a 16-hour light period and a 8-hour dark period. In this test, a temperature of 23°C at which the optimum growth was observed was regarded as a reference temperature (temperature stress-free test condition), and a stress was imposed by applying a temperature higher or lower than the reference temperature. A tomato as prepared above was planted in a 250 ml polyethylene bottle filled with the solution culture medium (1/2 Otsuka A formulation). A treatment solution as presented in Table 1 was sprayed onto the leaves or applied to the underground portion. In addition, a control plot to which a temperature of 23°C was applied, not imposing a stress (this is a control plot for plant body weight 2 for Formula (ii) and is a temperature stress-free control plot) and a control plot to which a temperature of 10, 15, or 32°C was applied and the treatment solution was not applied (this is a control plot for plant body weight 1 for Formula (ii) and is a control plot including a temperature stress) were prepared as controls. Ten specimens were prepared for each of the test plot and the control plots, and a plant stress level and an extent of imparting plant stress tolerance were calculated according to Formula (ii) and (iii) above using as a fresh plant body weight the average of the fresh plant body weights of each specimen 2 weeks after the beginning of the test. The results thus obtained are presented in Table 1. As presented in Table 1, the plant stress level was greater than 111% in each case, indicating stress. The extent of imparting plant stress tolerance against temperature as presented in Table 1 was no less than 105% with the products of the present invention, and clearly higher with the products of the present invention than the comparative products.

Example 3

Drying stress tolerance imparting test (tomato)

Test method

(1) Drying stress-free test conditions: soil pF value: 1.3. Other cultivation conditions were as with the conditions of the drying stress test.

Drying stress conditions: soil pF value: 2.3, 2.5, or 2.9, cultivation temperature: 23°C, relative humidity: 50%, illuminance: 5000 Lux (fluorescent light), light/dark cycle: 16 hours/8 hours

(2) Cultivation period: 3 weeks

(3) Soil: Kureha gardening soil manufactured by Kureha Corporation (fertilizer components: N:P:K = 0.4:1.9:0.6 g/kg soil)

(4) Plant preparation: A 50-cell tray was filled with Kureha gardening soil manufactured by Kureha Corporation (fertilizer components: N:P:K = 0.4:1.9:0.6 g/kg soil), and seeds of a "Momotaro" tomato were sowed, thinly covered with Kureha gardening soil, and sufficiently watered to allow the seeds to sprout. When the leaves in the 2-leaf stage fully unfolded, the soil on the tomato roots was carefully washed away with running water, and a test was performed.

(5) The chemicals used and the amount of a treatment solution applied were as in Example 1.

(6) Amount of treatment solution applied: 10 ml/specimen for leaf spraying, 50 ml/specimen for fertigation

Method of drying stress tolerance imparting test

Five tomato specimens as prepared above were planted in a 60-cm planter placed on a plant culture rack in an air-conditioned room. A soil water meter (manufactured by Daiki Rika Kogyo Co., Ltd.) was installed in the center of the planter, and while examining the moisture of the soil, irrigation was performed several times a day and the amount of irrigated water was controlled so as to attain a pF value of 2.3, 2.5, or 2.9. From immediately after planting the tomatoes, a treatment solution of Table 1 was sprayed onto the leaves or applied to the underground portions once a week. In addition, a control plot in which the pF value of the soil was controlled so as to be 1.3, not imposing a stress (this is a control plot for plant body weight 2 for Formula (ii) and is a drying stress-free control plot) and a control plot on which irrigation was performed so as to attain a pF value of 2.3, 2.5, or 2.9 and to which the treatment solution was not applied (this is a control plot for plant body weight 1 for Formula (ii) and is a control plot including a drying stress) were prepared. Five specimens (per planter) were prepared for each of the test plot and the control plots, plant bodies were collected 3 weeks after the beginning of the test such that the roots were not cut, the soil was washed away with running water, the fresh plant body weights were measured, and a plant stress level and an extent of imparting plant stress tolerance were calculated according to Formula (ii) and (iii) above using the average of the weights. The results thus obtained are presented in Table 1. As presented in Table 1, the plant stress level was greater than 111% in each case, indicating stress. The extent of imparting plant stress tolerance against drying as presented in Table 1 was no less than 105% with the products of the present invention, and clearly higher with the products of the present invention than the comparative products.

Example 4

Salt stress tolerance imparting test (tomato)

Test method

(1) Test conditions: temperature: 23°C, relative humidity: 50%, illuminance: 5000 Lux (fluorescent light), light/dark cycle:16 hours/8 hours
(2) Solution culture medium: tap water
(3) Salt stress conditions: NaCl concentration 3510 ppm (water potential by NaCl: 0.29 MPa)
(4) Cultivation period: two weeks
(5) Plant preparation: A 50-cell tray was filled with Kureha gardening soil manufactured by Kureha Corporation (fertilizer components: N:P:K = 0.4:1.9:0.6 g/kg soil), and seeds of a "Momotaro" tomato were sowed, thinly covered with Kureha gardening soil, and sufficiently irrigated to allow the seeds to sprout. When the leaves in the 2-leaf stage fully unfolded, the soil on the tomato roots was carefully washed away with running water, and a test was performed.
(6) The chemicals used and the concentration of a treatment solution were as in Example 1.
(7) Amount of application:10 ml/specimen for leaf spraying, 50 ml/specimen for fertigation

Method of salt stress tolerance imparting test

A test plot and control plots were cultivated in the same manner as in Example 1 except that the solution culture medium used was prepared by adding NaCl to tap water so as to attain 3510 ppm. As shown in Table 1, the conditions of this test were judged as resulting in a stress, but the extent of imparting plant stress tolerance against NaCl was clearly higher with the products of the present invention than the comparative products, and the extent of imparting plant stress tolerance with the products of the present invention was 105% or greater.

Example 5

Drying stress tolerance imparting test (potato variety: Tobyoshiro)

Test method

(1) Drying stress-free test conditions: soil pF value:1.3. Other cultivation conditions were the same as the conditions of the drying stress test.
Drying stress conditions: soil pF value: 2.3, 2.5, or 2.9, cultivation temperature: 23°C, relative humidity: 50%, illuminance: 5000 Lux (fluorescent light), light/dark cycle: 16 hours/8 hours
(2) Cultivation period: 3 weeks
(3) Soil: Kureha gardening soil manufactured by Kureha Corporation (fertilizer components: N:P:K = 0.4:1.9:0.6 g/kg soil)
(4) The chemicals used and the amount of a treatment solution applied were the same as in Example 3.

Method of drying stress tolerance imparting test

A planter (60 cm) was filled with Kureha gardening soil manufactured by Kureha Corporation (fertilizer components: N:P:K = 0.4:1.9:0.6 g/kg soil) in a glass greenhouse, tubers of a "Toyoshiro" potato were cut in half; and 5 pieces thereof were planted in the planter, thinly covered with Kureha gardening soil, and sufficiently watered to allow the tubers to sprout. When the leaves in the 3-leaf stage fully unfolded, the Solanum tuberosu was relocated on a plant culture rack in an air-conditioned room, and a test was initiated. A soil water meter (manufactured by Daiki Rika Kogyo Co., Ltd.) was installed in the center of the planter, and while examining the moisture of the soil, irrigation was performed several times a day so as to attain a pF value of 2.3, 2.5, or 2.9. From immediately after the beginning of the test, a treatment solution of Table 1 was sprayed onto the leaves or applied to the underground portions once a week. In addition, a control plot for which the soil pF value was controlled so as to be 1.3, not imposing a stress (this is a control plot for plant body weight 2 for Formula (ii) and is a drying stress-free control plot) and a control plot on which irrigation was performed so as to attain a pF value of 2.3, 2.5, or 2.9 and to which the treatment solution was not applied (this is a control plot for plant body weight 1 for Formula (ii) and is a control plot including a drying stress) were prepared as controls. Five specimens (per planter) were prepared for each of the test plot and the control plots, plant bodies were collected 3 weeks after the beginning of the test such that the roots were not cut, the soil was washed away with running water, the fresh plant body weights were measured, and a plant stress level and an extent of imparting plant stress tolerance were calculated according to Formula (ii) and (iii) above using the average of the weights. The results thus obtained are presented in Table 1. As presented in Table 1, the plant stress level was greater than 111% in each case, indicating stress. The extent of imparting plant stress tolerance against drying as presented in Table 1 was clearly higher with the products of the present invention than the comparative products, being no less than 105% with the products of the present invention.

Table 1

| | | Treatment solution | | | | | Example 1 Salt stress (tomato) | | | Example 2 Temperature stress (tomato) | | | Example 3 Drying stress (tomato) | | | Example 4 Salt stress (tomato) | | | Example 5 Drying stress (potato) | | |
|---|---|---|---|---|---|---|---|---|---|---|---|---|---|---|---|---|---|---|---|---|---|
| | | | Compound | Concentration (ppm) | Standard extent of imparting plant salt stress tolerance (%) | Place of application | NaCl concentration (ppm) | Plant stress level (%) | Extent of imparting plant stress tolerance (%) | Temperature | Plant stress level (%) | Extent of imparting plant stress tolerance (%) | pF value | Plant stress level (%) | Extent of imparting plant stress tolerance (%) | NaCl concentration (ppm) | Plant stress level (%) | Extent of imparting plant stress tolerance (%) | pF value | Plant stress level (%) | Extent of imparting plant stress tolerance (%) |
| Product of present invention | 1 | Sugar derivative-type surfactant | POE (20) sorbitan monooleic acid ester | 100 | 113 | Underground portion | 5000 | 160 | 135 | 10°C | 180 | 140 | 2.9 | 180 | 135 | – | – | – | 2.9 | 170 | 134 |
| | 2 | | POE (20) sorbitan monooleic acid ester | 100 | 113 | Underground portion | 3510 | 130 | 130 | 32°C | 125 | 127 | 2.3 | 120 | 129 | 3510 | 130 | 130 | 2.3 | 128 | 134 |
| | 3 | | POE (20) sorbitan monooleic acid ester | 100 | 113 | Underground portion | 1500 | 115 | 124 | 15°C | 150 | 130 | 2.5 | 150 | 128 | – | – | – | 2.5 | 145 | 127 |
| | 4 | | POE (20) sorbitan monooleic acid ester | 100 | 113 | Leaf | 5000 | 160 | 125 | 10°C | 180 | 125 | 2.9 | 180 | 124 | – | – | – | 2.9 | 170 | 124 |
| | 5 | | POE (20) sorbitan monooleic acid ester | 100 | 113 | Leaf | 3510 | 130 | 113 | 32°C | 125 | 114 | 2.3 | 120 | 113 | 3510 | 130 | 113 | 2.3 | 128 | 113 |
| | 6 | | POE (20) sorbitan monooleic acid ester | 100 | 113 | Leaf | 1500 | 115 | 113 | 15°C | 150 | 117 | 2.5 | 150 | 117 | – | – | – | 2.5 | 145 | 115 |
| | 7 | | POE (20) sorbitan monooleic acid ester | 1 | 113 | Leaf | 3510 | 130 | 111 | 32°C | 125 | 113 | 2.3 | 120 | 112 | 3510 | 130 | 112 | 2.3 | 128 | 112 |
| | 8 | | POE (20) sorbitan monooleic acid ester | 10 | 113 | Leaf | 3510 | 130 | 112 | 32°C | 125 | 113 | 2.3 | 120 | 113 | 3510 | 130 | 113 | 2.3 | 128 | 113 |
| | 9 | | POE (20) sorbitan monooleic acid ester | 1000 | 113 | Leaf | 3510 | 130 | 118 | 32°C | 125 | 119 | 2.3 | 120 | 117 | 3510 | 130 | 119 | 2.3 | 128 | 119 |
| | 10 | | POE (6) sorbitan monooleic acid ester | 100 | 112 | Leaf | 3510 | 130 | 113 | 32°C | 125 | 114 | 2.3 | 120 | 112 | 3510 | 130 | 112 | 2.3 | 128 | 113 |
| | 11 | | Sorbitan monooleic acid ester | 100 | 112 | Leaf | 3510 | 130 | 112 | 32°C | 125 | 113 | 2.3 | 120 | 112 | 3510 | 130 | 112 | 2.3 | 128 | 113 |
| | 12 | | POE (20) sorbitan monolauric acid ester | 100 | 116 | Leaf | 3510 | 130 | 116 | 32°C | 125 | 117 | 2.3 | 120 | 115 | 3510 | 130 | 116 | 2.3 | 128 | 117 |
| | 13 | | POE (20) sorbitan monopalmitic acid ester | 100 | 116 | Leaf | 3510 | 130 | 117 | 32°C | 125 | 116 | 2.3 | 120 | 116 | 3510 | 130 | 116 | 2.3 | 128 | 118 |
| | 14 | | POE (20) sorbitan monostearic acid ester | 100 | 114 | Leaf | 3510 | 130 | 116 | 32°C | 125 | 118 | 2.3 | 120 | 115 | 3510 | 130 | 114 | 2.3 | 128 | 115 |
| | 15 | | Alkyl ($C_{10}$) polyglycoside | 100 | 116 | Leaf | 3510 | 130 | 115 | 32°C | 125 | 115 | 2.3 | 120 | 117 | 3510 | 130 | 116 | 2.3 | 128 | 119 |
| | 16 | | Alkyl ($C_{12\text{-}14}$) polyglycoside | 100 | 117 | Leaf | 3510 | 130 | 115 | 32°C | 125 | 116 | 2.3 | 120 | 118 | 3510 | 130 | 117 | 2.3 | 128 | 121 |
| | 17 | | Sucrose fatty acid ester ($C_{18}$, HLB = 5) | 100 | 113 | Leaf | 3510 | 130 | 111 | 32°C | 125 | 111 | 2.3 | 120 | 112 | 3510 | 130 | 113 | 2.3 | 128 | 114 |
| | 18 | | Sucrose fatty acid ester ($C_{18}$, HLB = 9) | 100 | 113 | Leaf | 3510 | 130 | 112 | 32°C | 125 | 113 | 2.3 | 120 | 113 | 3510 | 130 | 113 | 2.3 | 128 | 115 |
| | 19 | | Sucrose fatty acid ester ($C_{18}$, HLB = 11) | 100 | 114 | Leaf | 3510 | 130 | 113 | 32°C | 125 | 114 | 2.3 | 120 | 115 | 3510 | 130 | 114 | 2.3 | 128 | 117 |
| | 20 | | Sucrose fatty acid ester ($C_{18}$, HLB = 15) | 100 | 116 | Leaf | 3510 | 130 | 113 | 32°C | 125 | 115 | 2.3 | 120 | 117 | 3510 | 130 | 116 | 2.3 | 128 | 118 |
| | 21 | | Sucrose fatty acid ester ($C_{16}$, HLB = 15) | 100 | 117 | Leaf | 3510 | 130 | 114 | 32°C | 125 | 116 | 2.3 | 120 | 117 | 3510 | 130 | 117 | 2.3 | 128 | 118 |
| | 22 | | Sucrose fatty acid ester ($C_{181}$, HLB = 15) | 100 | 118 | Leaf | 3510 | 130 | 115 | 32°C | 125 | 115 | 2.3 | 120 | 117 | 3510 | 130 | 118 | 2.3 | 128 | 119 |
| | 23 | | POE(20) sorbitan monolauric acid ester | 200 | 116 | Leaf | 3510 | 130 | 120 | 32°C | 125 | 121 | 2.3 | 120 | 118 | 3510 | 130 | 117 | 2.3 | 128 | 120 |
| | 24 | | Alkyl ($C_{10}$) polyglycoside | 200 | 116 | Leaf | 3510 | 130 | 114 | 32°C | 125 | 115 | 2.3 | 120 | 115 | 3510 | 130 | 113 | 2.3 | 128 | 116 |
| | 25 | | Sucrose fatty acid ester ($C_{181}$, HLB = 15) | 200 | 118 | Leaf | 3510 | 130 | 112 | 32°C | 125 | 113 | 2.3 | 120 | 113 | 3510 | 130 | 111 | 2.3 | 128 | 114 |
| Comparative product | 1 | | POE(20) sorbitan oleic acid ester<br>Stearyl alcohol | 1000<br>250 | 105 | Leaf | 3510 | 130 | 104 | 32°C | 125 | 105 | 2.3 | 120 | 105 | 3510 | 130 | 105 | 2.3 | 128 | 104 |
| | 2 | | Proline | 100 | 102 | Leaf | 3510 | 130 | 103 | 32°C | 125 | 102 | 2.3 | 120 | 103 | 3510 | 130 | 103 | 2.3 | 128 | 102 |
| | 3 | | Glycine betaine | 100 | 103 | Leaf | 3510 | 130 | 103 | 32°C | 125 | 102 | 2.3 | 120 | 103 | 3510 | 130 | 103 | 2.3 | 128 | 102 |
| | 4 | | Raffinose | 100 | 102 | Leaf | 3510 | 130 | 103 | 32°C | 125 | 103 | 2.3 | 120 | 102 | 3510 | 130 | 102 | 2.3 | 128 | 103 |
| | 5 | | Proline | 100 | 102 | Leaf | 1500 | 115 | 103 | 15°C | 150 | 102 | 2.5 | 150 | 102 | – | – | – | 2.5 | 145 | 103 |
| | 6 | | Proline | 100 | 102 | Leaf | 5000 | 160 | 103 | 10°C | 180 | 102 | 2.9 | 180 | 103 | – | – | – | 2.9 | 170 | 103 |

Example 6

Salt stress tolerance imparting test (tomato)

Test method

(1) A. soil culture

(a) Comparative example conditions (stress-free optimum growth conditions) Cultivation temperature: 23°C, EC:1.0 mS/cm (cultivation with Kureha gardening soil), pF value: 1.7 (capillaries in a saturated state)
(b) Example conditions (salt stress conditions)
Cultivation temperature: 23°C, EC:1.3, 2.0, 3.0 mS/cm (cultivation with Kureha gardening soil), pF value:1.7 (capillaries in a saturated state)
B. Hydroponic culture
(a) Comparative example conditions (stress-free optimum growth conditions) Cultivation temperature: 23°C, EC:1.3 mS/cm (Otsuka 1/2A formulation)
(b) Example conditions (salt stress conditions)
Cultivation temperature: 23°C, EC: 2.7, 3.9, 4.8 mS/cm (cultivation with Kureha gardening soil)

(2) Illuminance: 5000 Lux (fluorescent light), light/dark cycle: 16 hours/8 hours
(3) Employed soil: Kureha gardening soil manufactured by Kureha Corporation (fertilizer components: N:P:K = 0.4: 1.9:0.6 g/kg soil)
(4) Employed solution culture medium: Otsuka 1/2A formulation: a mixed solution of Otsuka House No. 1 (N:P:K =10:8:27) 7.5 g/10 L and Otsuka House No. 2 (N:P:K:Ca = 10:0:0:23) 5 g/10 L, total nitrogen: 130 ppm, phosphoric acid: 60 ppm, potassium: 203 ppm)
(5) Cultivation period: 2 weeks
(6) Plant preparation: A 50-cell tray was filled with Kureha gardening soil manufactured by Kureha Corporation (fertilizer components: N:P:K = 0.4:1.9:0.6 g/kg soil), and seeds of a "Momotaro" tomato or tubers of a "Danshaku" potato were sowed, thinly covered with Kureha gardening soil, and sufficiently watered to allow the seeds or the tubers to sprout. When the leaves in the 2-leaf stage or the 5-leaf stage fully unfolded, the soil on the tomato roots or the potato roots was carefully washed away with running water, and a test was performed.
(7) Test chemicals:

POE (20) sorbitan monolauric acid ester: Reodol TW-L120 (Kao Corporation)
POE (20) sorbitan monopalmitic acid ester: Reodol TW-P120 (Kao Corporation)
POE (20) sorbitan monostearic acid ester: Reodol TW-S120 (Kao Corporation)
POE (20) sorbitan monooleic acid ester: Reodol TW-O120 (Kao Corporation)
Sorbitan monooleic acid ester: Emasol O-10(F) (Kao Corporation)
POE (6) sorbitan monooleic acid ester: Reodol TW-O106 (Kao Corporation)
Alkyl (number of carbon atoms:10) polyglucoside: AG-10LK (Kao Corporation)
Alkyl (number of carbon atoms:12 to 14) polyglucoside: AG-124 (Kao Corporation)
Sucrose fatty acid ester (number of carbon atoms: C18, HLB: 5): S-570 (Mitsubishi-Kagaku Foods Corporation)
Sucrose fatty acid ester (number of carbon atoms: C18, HLB: 9): S-970 (Mltsubishi-Kagaku Foods Corporation)
Sucrose fatty acid ester (number of carbon atoms: C18, HLB:11): S-1170 (Mitsubishi-Kagaku Foods Corporation)
Sucrose fatty acid ester (number of carbon atoms: C18, HLB:15): S-1570 (Mitsubishi-Kagaku Foods Corporation)
Sucrose fatty acid ester (number of carbon atoms: C16, HLB:15): P-1570 (Mitsubishi-Kagaku Foods Corporation)
Sucrose fatty acid ester (number of carbon atoms: C18:1, HLB:15):O-1570 (Mitsubishi-Kagaku Foods Corporation)

(8) Amount of treatment solution applied:10 ml/specimen for leaf spraying, 250 ml/specimen for hydroponic culture (treatment of underground portion)
(9) 50 ml/specimen for soil culture (treatment of underground portion)

Method of salt stress tolerance imparting test

A. Soil culture test

The environmental conditions in a climatic chamber were controlled so as to have a temperature of 23°C, an illuminance by a fluorescent light of 5000 Lux, and a daily light-dark cycle of a 16-hour light period and an 8-hour dark period. Tomatoes as prepared above were transplanted in size-3 (9 cm) pots. During the test period, the EC value was controlled by adding a suitable amount of a 10% NaCl solution once a day so as to attain a specific salt stress value. A treatment solution containing a compound of Table 1 in a specific concentration (the remainder was water) was prepared and sprayed onto the leaves or applied to the underground portions. In each test plot, 10 specimens were prepared for replication, and the average of the fresh weight of each specimen 2 weeks after the beginning of the test was calculated and expressed as a relative value where "100" indicates a result identical to that of the untreated plot of a given EC condition. A comparative example was constructed to reflect the stress-free optimum cultivation conditions to investigate the plant energizing ability. The results thus obtained are presented in Table 2. The results showed that, as presented in Table 2, the products of the present invention all exhibited an extremely high growth enhancing effect under salt stress conditions having a high EC value and had a high stress tolerance imparting ability while they did not exhibit any growth effect under the stress-free conditions of the comparative example. Moreover, when the products of the present invention and the comparative products were compared, the stress tolerance imparting ability of the products of the present invention was higher in respective salt stress conditions.

B. Hydroponic culture

The environmental conditions in a climatic chamber were controlled so as to have a temperature of 23°C, an illuminance by a fluorescent light of 5000 Lux, and a daily light-dark cycle of a 16-hour light period and an 8-hour dark period. Tomatoes as prepared above were planted in 250 ml polyethylene bottles each filled with a solution culture medium having a different EC value. Different EC values were achieved by taking a 1/2 Otsuka A formulation having an EC value of 1.3 as a standard and suitably increasing the fertilizer concentration through proportional counting. A treatment solution containing a compound of Table 1 in a specific concentration (the remainder was water) was prepared and sprayed onto the leaves or applied to the underground portion. In each test plot, 10 specimens were prepared for replication, and the average of the fresh weight of each specimen 2 weeks after the beginning of the test was calculated and expressed as a relative value where "100" indicates a result identical to that of the untreated plot of a given EC condition. In addition, a comparative example was constructed to reflect the stress-free optimum cultivation conditions to investigate the plant energizing ability. The results thus obtained are presented in Table 2. The results showed that, as presented in Table 2, the products of the present invention all exhibited an extremely high growth enhancing effect under salt stress conditions having a high EC value and had a high stress tolerance imparting ability while they did not exhibit any growth effect under the stress-free conditions of the comparative example. Moreover, when the products of the present invention and the comparative products were compared, the stress tolerance imparting ability of the products of the present invention was higher in respective salt stress conditions.

Table 2

| | Example 6<br>Salt stress test (tomato) | | | | | | | | | |
|---|---|---|---|---|---|---|---|---|---|---|
| | Example | | | | Comparative example | Example | | | | Comparative example |
| | Test 1 | Test 2 | Test 3 | Test 4 | Comparison 1 | Test 5 | Test 6 | Test 7 | Test 8 | Comparison 2 |
| Cultivation method | Soil culture | | | | | Hydroponic culture | | | | |
| Cultivation temperature | 23 | 23 | 23 | 23 | 23 | 23 | 23 | 23 | 23 | 23 |
| EC | 1.3 | 2 | 3 | 2 | 1 | 2.7 | 3.9 | 4.8 | 3.9 | 1.3 |
| pF value | 1.7 | 1.7 | 1.7 | 1.7 | 1.7 | - | - | - | - | - |
| Growth stage | Two-leaf stage | Two-leaf stage | Two-leaf stage | Five-leaf stage | Two-leaf stage | Two-leaf stage | Two-leaf stage | Two-leaf stage | Five-leaf stage | Two-leaf stage |

| | | Compound | Concentration (ppm) | Place of application | Test 1 | Test 2 | Test 3 | Test 4 | Comparison 1 | Test 5 | Test 6 | Test 7 | Test 8 | Comparison 2 |
|---|---|---|---|---|---|---|---|---|---|---|---|---|---|---|
| Product of present invention | Sugar derivative-type surfactant | POE (20) sorbitan monooleic acid ester | 100 | Underground portion | 142 | 185 | 140 | 156 | 103 | 145 | 190 | 145 | 160 | 104 |
| | | POE (20) sorbitan monolauric acid ester | 100 | Leaf | 131 | 155 | 133 | 146 | 101 | 136 | 160 | 135 | 147 | 101 |
| | | Alkyl ($C_{10}$) polyglycoside | 100 | Leaf | 121 | 142 | 121 | 134 | 101 | 125 | 145 | 125 | 138 | 101 |
| | | Sucrose fatty acid ester ($C_{18}$, HLB = 15) | 100 | Leaf | 120 | 134 | 119 | 129 | 103 | 121 | 138 | 125 | 133 | 103 |
| Comparative product | | Not treated | - | - | 100 | 100 | 100 | 100 | 100 | 100 | 100 | 100 | 100 | 100 |
| | | Proline | 100 | Underground portion | 103 | 103 | 100 | 100 | 102 | 103 | 103 | 102 | 100 | 103 |
| | | Proline | 100 | Leaf | 102 | 102 | 101 | 101 | 101 | 102 | 102 | 102 | 101 | 102 |
| | | Glycine betaine | 100 | Leaf | 103 | 103 | 103 | 101 | 102 | 103 | 103 | 102 | 101 | 102 |
| | | Raffinose | 100 | Leaf | 103 | 103 | 103 | 101 | 102 | 103 | 103 | 103 | 102 | 102 |
| | | POE (20) sorbitan monooleic acid ester<br>Stearyl alcohol | 100<br>100 | Leaf | 108 | 111 | 110 | 109 | 131 | 106 | 110 | 107 | 109 | 132 |

Example 7

Drying stress tolerance imparting test (tomato)

Test conditions

(1) A. Soil culture (cultivation with Kureha gardening soil)

(a) Comparative example conditions (stress-free optimum growth conditions) Cultivation temperature: 23°C, EC:1.0 mS/cm (cultivation with Kureha gardening soil), pF value: 1.7 (capillaries in a saturated state)
(b) Example conditions (drying stress conditions)
Cultivation temperature: 23°C, EC:1.0 (cultivation with Kureha gardening soil), pF values: 2.8, 3.5, 4.1
Other conditions were as in Example 5.

Method of drying stress tolerance imparting test

A Soil culture test

The environmental conditions in a climatic chamber were controlled so as to have a temperature of 23°C, an illuminance by a fluorescent light of 5000 Lux, and a daily light-dark cycle of a 16-hour light period and an 8-hour dark period. Tomatoes as prepared above were transplanted in size-3 (9 cm) pots. During the test period, the pF value was controlled by adding a suitable amount of tap water once a day so as to attain a specific drying stress value. A treatment solution containing a compound of Table 1 in a specific concentration (the remainder was water) was prepared and sprayed onto the leaves or applied to the underground portions. In each test plot, 10 specimens were prepared for replication, and the average of the fresh weight of each specimen 2 weeks after the beginning of the test was calculated and expressed as a relative value where "100" indicates a result identical to that of the untreated plot of a given EC value condition. A comparative example was constructed to reflect the drying stress-free optimum cultivation conditions to investigate the plant energizing ability. The results thus obtained are presented in Table 3. The results showed that, as presented in Table 3, the products of the present invention all exhibited an extremely high growth enhancing effect under drying stress conditions having a high pF value and had a high stress tolerance imparting ability while they did not exhibit any growth effect under the drying stress-free conditions of the comparative example. Moreover, when the products of the present invention and the comparative products were compared, the stress tolerance imparting ability of the products of the present invention was higher in respective drying stress conditions.

Table 3

| | | | | | Example 7 Drying stress test (tomato) | | | | |
|---|---|---|---|---|---|---|---|---|---|
| | | | | | Example | | | | Comparative example |
| | | | | | Test 1 | Test 2 | Test 3 | Test 4 | Comparison 1 |
| | | | | Cultivation method | Soil culture | | | | |
| | | | | Cultivation temperature | 23 | 23 | 23 | 23 | 23 |
| | | | | EC | 1 | 1 | 1 | 1 | 1 |
| | | | | pF value | 2.8 | 3.5 | 4.1 | 3.5 | 1.7 |
| | | | | Growth stage | Two-leaf stage | Two-leaf stage | Two-leaf stage | Five-leaf stage | Two-leaf stage |
| | | Compound | Concentration (ppm) | Place of application | Test 1 | Test 2 | Test 3 | Test 4 | Comparison 1 |
| Product of present invention | Sugar derivative-type surfactant | POE (20) sorbitan monooleic acid ester | 100 | Underground portion | 134 | 188 | 145 | 160 | 103 |
| | | POE (20) sorbitan monolauric acid ester | 100 | Leaf | 130 | 162 | 135 | 148 | 101 |
| | | Alkyl ($C_{10}$) polyglycoside | 100 | Leaf | 121 | 147 | 126 | 139 | 101 |
| | | Sucrose fatty acid ester ($C_{18}$, HLB = 15) | 100 | Leaf | 119 | 139 | 124 | 136 | 103 |
| Comparative product | | Not treated | - | - | 100 | 100 | 100 | 100 | 100 |
| | | Proline | 100 | Underground portion | 102 | 103 | 101 | 100 | 102 |
| | | Proline | 100 | Leaf | 102 | 102 | 101 | 101 | 101 |
| | | Glycine betaine | 100 | Leaf | 102 | 103 | 103 | 101 | 102 |
| | | Raffinose | 100 | Leaf | 103 | 103 | 103 | 101 | 102 |
| | | POE (20) sorbitan monooleic acid ester<br>Stearyl alcohol | 100<br>100 | Leaf | 108 | 112 | 107 | 109 | 133 |

Example 8

Temperature stress tolerance imparting test (tomato)

Test conditions

(1) A. Soil culture (cultivation with Kureha gardening soil)

(a) Comparative example conditions (stress-free optimum growth conditions) Cultivation temperature: 23°C, EC: 1.0 mS/cm (cultivation with Kureha gardening soil), pF value: 1.7 (capillaries in a saturated state)
(b) Example conditions (temperature stress conditions)
Cultivation temperature: 23°C, EC: 1.0 (cultivation with Kureha gardening soil),
temperature: 10,16, 29, 35°C
Other conditions were as in Example 5.

Method of temperature stress tolerance imparting test

A Soil culture test

The environmental conditions in a climatic chamber were controlled so as to have an illuminance by a fluorescent light of 5000 Lux, a daily light-dark cycle of a 16-hour light period and an 8-hour dark period, and various temperatures. Tomatoes as prepared above were transplanted in size-3 (9 cm) pots. A treatment solution containing a compound of Table 1 in a specific concentration (the remainder was water) was prepared and sprayed onto the leaves or applied to the underground portions. In each test plot, 10 specimens were prepared for replication, and the average of the fresh weight of each specimen 2 weeks after the beginning of the test was calculated and expressed as a relative value where "100" indicates a result identical to that of the untreated plot under a given temperature condition. A comparative example was constructed to reflect the temperature stress-free optimum cultivation conditions to investigate the plant energizing ability. The results thus obtained are presented in Table 4. The results showed that, as presented in Table 4, the products of the present invention all exhibited an extremely high growth enhancing effect under temperature stress conditions having a high EC value and had a high stress tolerance imparting ability while they did not exhibit any growth effect under the stress-free conditions of the comparative example. Moreover, when the products of the present invention and the comparative products were compared, the stress tolerance imparting ability of the products of the present invention was higher in respective temperature stress conditions.

Table 4

| | Example 8 Temperature stress test (tomato) | | | | |
|---|---|---|---|---|---|
| | Example | | | | Comparative example |
| | Test 1 | Test 2 | Test 3 | Test 4 | Comparison 1 |
| Cultivation method | Soil culture | | | | |
| Cultivation temperature | 10 | 16 | 29 | 35 | 23 |
| EC | 1 | 1 | 1 | 1 | 1 |
| pF value | 1.7 | 1.7 | 1.7 | 1.7 | 1.7 |
| Growth stage | Two-leaf stage | Two-leaf stage | Two-leaf stage | Two-leaf stage | Two-leaf stage |

| | | Compound | Concentration (ppm) | Place of application | Test 1 | Test 2 | Test 3 | Test 4 | Comparison 1 |
|---|---|---|---|---|---|---|---|---|---|
| Product of present invention | Sugar derivative-type surfactant | POE (20) sorbitan monooleic acid ester | 100 | Underground portion | 128 | 131 | 158 | 138 | 103 |
| | | POE (20) sorbitan monolauric acid ester | 100 | Leaf | 124 | 126 | 144 | 132 | 102 |
| | | Alkyl ($C_{10}$) polyglycoside | 100 | Leaf | 116 | 119 | 136 | 126 | 102 |
| | | Sucrose fatty acid ester ($C_{18}$, HLB = 15) | 100 | Leaf | 114 | 116 | 133 | 122 | 102 |
| Comparative product | | Not treated | - | - | 100 | 100 | 100 | 100 | 100 |
| | | Proline | 100 | Underground portion | 100 | 100 | 101 | 100 | 102 |
| | | Proline | 100 | Leaf | 100 | 100 | 101 | 101 | 101 |
| | | Glycine betaine | 100 | Leaf | 100 | 100 | 101 | 101 | 102 |
| | | Raffinose | 100 | Leaf | 100 | 100 | 101 | 101 | 102 |
| | | POE (20) sorbitan monooleic acid ester<br>Stearyl alcohol | 100<br>100 | Leaf | 104 | 105 | 108 | 106 | 125 |

Example 9

Drying stress tolerance imparting test (potato)

Test conditions

(1) A. Soil culture (cultivation with Kureha gardening soil)

(a) Comparative example conditions (stress-free optimum growth conditions) Cultivation temperature: 23°C, EC:1.0 mS/cm (cultivation with Kureha gardening soil), pF value:1.7 (capillaries in a saturated state)
(b) Example conditions (drying stress conditions)
Cultivation temperature: 23°C, EC:1.0 (cultivation with Kureha gardening soil), pF values: 2.8, 3.5, 4.1
Other conditions were as in Example 5.

Method of drying stress tolerance imparting test

A. Soil culture test

The environmental conditions in a climatic chamber were controlled so as to have a temperature of 23°C, an illuminance by a fluorescent light of 5000 Lux, and a daily light-dark cycle of a 16-hour light period and an 8-hour dark period. Potatoes as prepared above were transplanted in size-5 (15 cm) pots. During the test period, the pF value was controlled by adding a suitable amount of tap water once a day so as to attain a specific drying stress value. A treatment solution containing a compound of Table 5 in a specific concentration (the remainder was water) was prepared and sprayed onto the leaves or applied to the underground portions. In each test plot, 10 specimens were prepared for replication, and the average of the fresh weight of each specimen 2 weeks after the beginning of the test was calculated and expressed as a relative value where "100" indicates a result identical to that of the untreated plot of a given pF value condition. A comparative example was constructed to reflect the drying stress-free optimum cultivation conditions to investigate the plant energizing ability. The results thus obtained are presented in Table 5. The results showed that, as presented in Table 5, the products of the present invention all exhibited an extremely high growth enhancing effect under drying stress conditions having a high pF value and had a high stress tolerance imparting ability while they did not exhibit any growth effect under the drying stress-free conditions of the comparative example. Moreover, when the products of the present invention and the comparative products were compared, the stress tolerance imparting ability of the products of the present invention was higher in respective drying stress conditions.

Table 5

| | Example 9<br>Drying stress test (potato) | | | | |
|---|---|---|---|---|---|
| | Example | | | | Comparative example |
| | Test 1 | Test 2 | Test 3 | Test 4 | Comparison 1 |
| Cultivation method | Soil culture | | | | |
| Cultivation temperature | 23 | 23 | 23 | 23 | 23 |
| EC | 1 | 1 | 1 | 1 | 1 |
| pF value | 2.8 | 3.5 | 4.1 | 3.5 | 1.7 |
| Growth stage | Two-leaf stage | Two-leaf stage | Two-leaf stage | Five-leaf stage | Two-leaf stage |

| | | Compound | Concentration (ppm) | Place of application | Test 1 | Test 2 | Test 3 | Test 4 | Comparison 1 |
|---|---|---|---|---|---|---|---|---|---|
| Product of present invention | Sugar derivative-type surfactant | POE (20) sorbitan monooleic acid ester | 100 | Underground portion | 133 | 185 | 140 | 156 | 102 |
| | | POE (20) sorbitan monolauric acid ester | 100 | Leaf | 128 | 148 | 129 | 145 | 101 |
| | | Alkyl ($C_{10}$) polyglycoside | 100 | Leaf | 121 | 142 | 121 | 134 | 102 |
| | | Alkyl ($C_{12\text{-}14}$) polyglycoside | 100 | Leaf | 120 | 140 | 120 | 132 | 101 |
| | | Sucrose fatty acid ester ($C_{18}$, HLB = 15) | 100 | Leaf | 118 | 135 | 118 | 128 | 102 |
| Comparative product | | Not treated | - | - | 100 | 100 | 100 | 100 | 100 |
| | | Proline | 100 | Underground portion | 102 | 102 | 101 | 100 | 102 |
| | | Proline | 100 | Leaf | 102 | 102 | 101 | 101 | 101 |
| | | Glycine betaine | 100 | Leaf | 102 | 102 | 102 | 101 | 102 |
| | | Raffinose | 100 | Leaf | 103 | 103 | 103 | 101 | 102 |
| | | POE (20) sorbitan monooleic acid ester<br>Stearyl alcohol | 100<br>100 | Leaf | 105 | 106 | 104 | 107 | 128 |

Industrial Applicability

The plant stress tolerance imparting composition of the present invention is useful in, for example, agriculture practiced in cold regions and tropical regions.

## Claims

1. A method for imparting stress tolerance to a plant, comprising the step of applying a plant stress tolerance imparting composition comprising a sugar derivative-type surfactant and water to a plant placed under a stressful cultivation condition that yields a plant stress level of 111 to 200%,
the sugar derivative-type surfactant comprising at least one sugar derivative-type surfactant having a structure selected from the group consisting of an ester of a sugar and a fatty acid, an ester of a sugar alcohol and a fatty acid, and an alkylglycoside,
the sugar derivative-type surfactant being contained in an amount of 85 to 100 wt% of a total amount of components other than water contained in the tolerance imparting composition.

2. The method for imparting stress tolerance to a plant according to claim 1, wherein the stressful cultivation condition is a cultivation condition comprising at least one stress factor selected from a salt stress resulting from a salt concentration in a soil or a culture solution, a drying stress resulting from a moisture content of a soil, and a temperature stress resulting from a temperature of a cultivation environment.

3. The method for imparting stress tolerance to a plant according to claim 2, wherein the salt stress is a salt stress resulting from a soil EC value of 1.2 to 3.4 mS/cm in soil culture or an EC value of 2.7 to 5.0 mS/cm in hydroponic culture,
the drying stress is a drying stress resulting from a soil pF value of 2.7 to 4.2, and
the temperature stress is a temperature stress resulting from an average cultivation temperature of 28 to 40°C or 5 to 17°C.

4. The method for imparting stress tolerance to a plant according to any one of claims 1 to 3, wherein the ester of a sugar and a fatty acid is a sucrose fatty acid ester.

5. The method for imparting stress tolerance to a plant according to any one of claims 1 to 4, wherein the ester of a sugar alcohol and a fatty acid is at least one member selected from the group consisting of sorbitan fatty acid esters, polyoxyalkylene sorbitan fatty acid esters, sorbit fatty acid esters, polyoxyalkylene sorbit fatty acid esters, glycerol fatty acid esters, polyglycerol fatty acid esters, and polyoxyalkylene glycerol fatty acid esters.

6. The method for imparting stress tolerance to a plant according to any one of claims 1 to 5, wherein the alkylglycoside is represented by Formula (1) below:

$$R^1(OR^2)_xG_y \qquad (1)$$

wherein $R^1$ represents a linear or branched $C_{8-18}$ alkyl group, alkenyl group, or alkylphenyl group, $R^2$ represents a $C_{2-4}$ alkylene group, G represents a residue derived from a $C_{5-6}$ reducing sugar, x is 0 to 5 on average, and y is 1 to 5 on average.

7. The method for imparting stress tolerance to a plant according to any one of claims 1 to 6, wherein the concentration of the sugar derivative-type surfactant in the plant stress tolerance imparting composition is 0.01 to 10000 ppm when the plant stress tolerance imparting composition is applied to a leaf of the plant.

8. The method for imparting stress tolerance to a plant according to any one of claims 1 to 6, wherein the concentration of the sugar derivative-type surfactant in the plant stress tolerance imparting composition is 0.01 to 10000 ppm when the plant stress tolerance imparting composition is applied to an underground portion of the plant.

9. The method for imparting stress tolerance to a plant according to any one of claims 1 to 8, wherein the plant is selected from the group consisting of fruiting vegetables, leaf vegetables, root vegetables, rice plants, cereals, and flowering plants.

**10.** A method for producing a plant, comprising the method for imparting stress tolerance to a plant according to any one of claims 1 to 9.

**11.** A plant stress tolerance imparting composition comprising a sugar derivative-type surfactant and water,
the sugar derivative-type surfactant comprising at least one sugar derivative-type surfactant having a structure selected from the group consisting of an ester of a sugar and a fatty acid, an ester of a sugar alcohol and a fatty acid, and an alkylglycoside,
the sugar derivative-type surfactant being contained in an amount of 85 to 100 wt% of a total amount of components other than water contained in the tolerance imparting composition.

**12.** The plant stress tolerance imparting composition according to claim 11, wherein the ester of a sugar and a fatty acid is a sucrose fatty acid ester.

**13.** The plant stress tolerance imparting composition according to claim 11 or 12, wherein the ester of a sugar alcohol and a fatty acid is at least one member selected from the group consisting of sorbitan fatty acid esters, polyoxyalkylene sorbitan fatty acid esters, sorbit fatty acid esters, polyoxyalkylene sorbit fatty acid esters, glycerol fatty acid esters, polyglycerol fatty acid esters, and polyoxyalkylene glycerol fatty acid esters.

**14.** The plant stress tolerance imparting composition according to any one of claims 11 to 13, wherein the alkylglyooside is represented by Formula (1) below:

$$R^1(OR^2)_xG_y \qquad (1)$$

wherein $R^1$ represents a linear or branched $C_{8-18}$ alkyl group, alkenyl group, or alkylphenyl group, $R^2$ represents a $C_{2-4}$ alkylene group, G represents a residue derived from a $C_{5-6}$ reducing sugar, x is 0 to 5 on average, and y is 1 to 5 on average.

**15.** Use of the plant stress tolerance imparting composition according to any one of claims 11 to 14 for imparting stress tolerance to a plant placed under a stressful cultivation condition that yields a plant stress level of 111 to 200%.

**16.** The use of a plant stress tolerance imparting composition according to claim 15, wherein the stressful cultivation condition is a cultivation condition comprising at least one stress factor selected from a salt stress resulting from a salt concentration in a soil or a culture solution, a drying stress resulting from a moisture content of a soil, and a temperature stress resulting from a temperature of a cultivation environment.

**17.** The use of a plant stress tolerance imparting composition according to claim 15 or 16, wherein the salt stress is a salt stress resulting from a soil EC value of 1.2 to 3.4 mS/cm in soil culture or an EC value of 2.7 to 5.0 mS/cm in hydroponic culture,
the drying stress is a drying stress resulting from a soil pF value of 2.7 to 4.2, and
the temperature stress is a temperature stress resulting from an average cultivation temperature of 28 to 40°C or 5 to 17°C.

**18.** The use of a plant stress tolerance imparting composition according to any one of claims 15 to 17, wherein the concentration of the sugar derivative-type surfactant in the plant stress tolerance imparting composition is 0.01 to 10000 ppm when the plant stress tolerance imparting composition is applied to a leaf of the plant.

**19.** The use of a plant stress tolerance imparting composition according to any one of claims 15 to 17, wherein the concentration of the sugar derivative-type surfactant in the plant stress tolerance imparting composition is 0.01 to 10000 ppm when the plant stress tolerance imparting composition is applied to an underground portion of the plant.

**20.** The use of a plant stress tolerance imparting composition according to any one of claims 15 to 19, wherein the plant is selected from the group consisting of fruiting vegetables, leaf vegetables, root vegetables, rice plants, cereals, and flowering plants.

**INTERNATIONAL SEARCH REPORT**

International application No.
PCT/JP2008/065451

A. CLASSIFICATION OF SUBJECT MATTER
*A01G7/00*(2006.01)i, *A01G7/06*(2006.01)i, *A01N43/16*(2006.01)i, *A01P21/00*(2006.01)i

According to International Patent Classification (IPC) or to both national classification and IPC

B. FIELDS SEARCHED

Minimum documentation searched (classification system followed by classification symbols)
A01G7/00, A01G7/06, A01N43/16, A01P21/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-265307 A (Kao Corp.), 18 September, 2002 (18.09.02), Par. Nos. [0008] to [0020]; tables 2 to 4 & US 2004/0142822 A1 & EP 1366663 A1 & WO 2002/071842 A1 | 1-5,7-13, 15-20<br>6 |
| X<br>A | JP 2006-213612 A (Kao Corp.), 17 August, 2006 (17.08.06), Par. No. [0026]; tables 2, 3 (Family: none) | 11,14<br>1-10,12,13, 15-20 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October, 2008 (06.10.08) | 14 October, 2008 (14.10.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/065451

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

A common matter among the inventions of claims 1-20 is "a plant stress tolerance-imparting composition comprising a sugar derivative type of surfactant and water, wherein the sugar derivative type of surfactant comprises at least one sugar derivative type of surfactant having a structure selected from the group consisting of an ester of a sugar and a fatty acid, an ester of a sugar alcohol and a fatty acid and an alkyl glycoside, and wherein the sugar derivative type of surfactant is contained in the composition in an amount of 85 to 100 wt% relative to the total amount of the components other than water contained in the composition". However, as a result of the search,

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2007)

**INTERNATIONAL SEARCH REPORT**

International application No.
PCT/JP2008/065451

Continuation of Box No.III of continuation of first sheet(2)

it is found that the composition is not novel, as disclosed in JP 2002-265307 A. Consequently, the composition does not go beyond the scope of the prior art, and the common matter cannot be regarded as a special technical feature in the meaning within PCT Rule 13.2, second sentence.

Further, there is no other common matter that can be regarded as a special technical feature in the meaning within PCT Rule 13.2, second sentence, and there is found no technical relationship in the meaning within PCT Rule 13 among these distinct inventions.

Thus, it is obvious that the inventions of claims 1-20 do not comply with the requirement of unity of invention.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002262885 A
- JP 2005192534 A
- JP 2001316207 A


### Non-patent literature cited in the description


- Tanpakushitsu, Kakusan, Kouso. Kyoritsu Shuppan Co., Ltd, 1999, vol. 44, 54-65